(19) Europäisches Patentamt
European Patent Office
Office européen des brevets

(11) EP 0 938 045 A1

(12) **EUROPEAN PATENT APPLICATION**

(43) Date of publication:
**25.08.1999 Bulletin 1999/34**

(51) Int. Cl.$^6$: **G06F 9/44**

(21) Application number: **98202475.4**

(22) Date of filing: **23.07.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **19.02.1998 EP 98200502**

(71) Applicant: **IMEC vzw**
**B-3001 Leuven Heverlee (BE)**

(72) Inventor: **Vercauteren, Steven**
**B-3050 Oud-Heverlee (BE)**

(74) Representative:
**Bird, William Edward et al**
**Bird Goen & Co.,**
**Termerestraat 1**
**3020 Winksele (BE)**

# (54) Method and apparatus for efficient verification using a generalised partial order analysis

(57) A method implemented in a computational device of verifying that a system being analysed has a safeness and/or liveness property is described, comprising the steps of: using at least statically available information to substantially reduce the work required to compute a state space describing the system being analysed by computing a reduced state space of the system, the reduced state space still provably permitting verification of the safeness or liveness property; and using the reduced state space to verify the safeness and/or liveness property. The method also includes the step of:

including within the definition of each new state of the reduced state space, history information about at least the mutually exclusive transitions enabled in any previous state;
or,
determining statically the presence of a maximal conflicting transition set which is multiple enabled and whose firing will not disable any other maximal conflicting transition set either in the currently processed state or subsequently nor will disable any other transition either in the currently processed state or subsequently which is single enabled and is not in said first maximal conflicting transition set.

A verification tool and a simulator are also described for carrying out the above method.

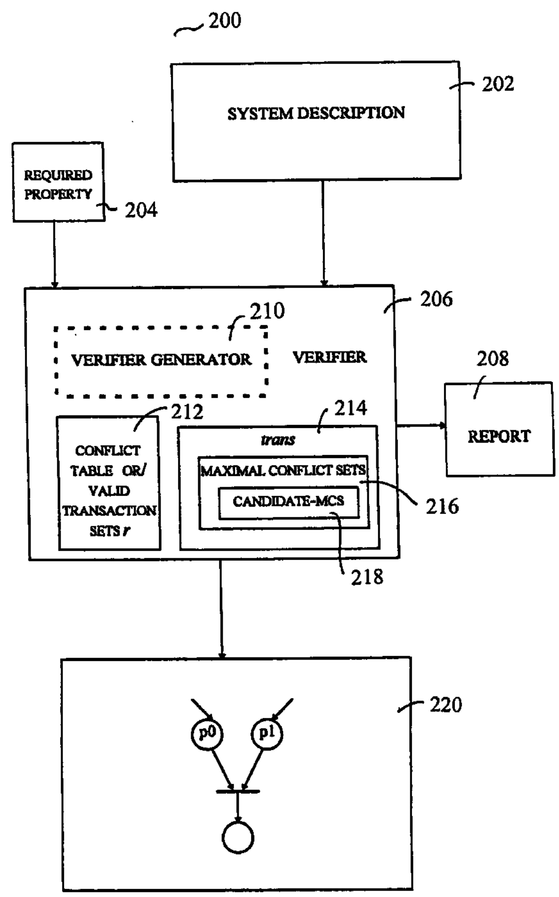


Fig. 9

EP 0 938 045 A1

## Description

The present invention relates to a method and apparatus for verifying systems with concurrently operating components and in particular to an apparatus and method for the verification of a safeness and/or a liveness and/or a related property such as deadlock in such systems. Preferably, the present invention uses a safe Petri net representation.

## TECHNOLOGICAL BACKGROUND

Most modern embedded systems are notoriously difficult to design. Despite utmost care exercised by designers, initial design specifications often contain subtle, difficult to detect errors that result from unanticipated interactions between the concurrent parts. Traditional analysis methods such as simulation are often inadequate for uncovering such errors, especially those that only occur under rare conditions. Thus, automated formal verification tools are becoming an indispensable part of a designer's tool-box. Conventional analysis for Petri nets mainly involves a reachability analysis of the underlying state space. However, there are two primary sources of combinatorial explosion that makes this conventional approach intractable for many problems. The first source is due to concurrently enabled actions. Due to the underlying unbounded delay assumption of Petri nets, concurrently enabled actions may fire in any order. These interleaving semantics require the analysis to enumerate all possible orderings, which has a factorial complexity with respect to the number of concurrently enabled actions. To circumvent this problem, partial-order analysis (also referred to as stubborn-set or anticipation analysis) techniques have been developed where it has been shown that only one interleaved sequence needs to be analysed for deadlock and liveness checks. The second source is due to concurrently marked conflict places. A conflict place specifies a choice in a Petri net. In conventional analysis, each branch of a conflict place must be traversed independently. When there are multiple conflict places marked concurrently, all possible combinations of paths must be enumerated, which has an exponential complexity with respect to the number of concurrently marked conflict places. This source of complexity is not avoided by partial-order analysis techniques, thus still leaving many problems intractable.

The book by Gerald. J. Holzmann, entitled "Design and Validation of computer protocols" is an excellent review of known verification systems and the tool "SPIN".

US 5,283,896 describes a method and system of controlling mutually exclusive resources and for preventing deadlocks in a multi-tasking computer system by generating a graph containing nodes to which are mapped the tasks included in a flow process and the critical resources which may be appropriated by at least one of the tasks. The nodes of tasks executed sequentially are arranged sequentially; the nodes of tasks executed in parallel are arranged in parallel with each other and each node of a critical resource is arranged in parallel with every node which may appropriate it. The execution of a subsequent task requiring a critical resource is delayed until a current task is completed and the resources are freed.

US 5,615,137 describes an on-the-fly verification system which employs statically available information to reduce the size of the state space required to verify liveness and safety properties of a target system. The size of the state space of the system is reduced by using information from the description and the specification of the system to divide transitions from a node into per-process bundles and to determine which bundles of transitions may be left out.

A technique for tackling the combinatorial explosion problem is symbolic analysis, e.g. as explained by R. R. Bryant, "Graph-based Algorithms for Boolean Function Manipulation", IEEE Transactions on Computers, 35(8), pp. 677--691, August 1986; J. R. Burch, E. M. Clarke, K. L. McMillan, and D. L. Dill, "Sequential Circuit Verification Using Symbolic Model Checking", Proc. of the 27th ACM/IEEE Design Automation Conference, Orlando, June 1990; O. Coudert, J. C. Madre, and C. Berthet, "Verifying Temporal Properties of Sequential Machines Without Building their State Diagrams", Workshop on Computer-Aided Verification, Rutgers, June 1990; or E. Pastor, O. Roig, J. Cortadella, and R. M. Badia, "Petri Net Analysis using Boolean Manipulation", Lecture Notes in Computer Science 815, Springer Verlag, pp. 416--435, June 1994. Symbolic analysis approaches implicitly enumerate the state space and have been used to tackle the complexity problem. They are effective when the state space being traversed can be efficiently encoded using binary decision diagrams. This approach does not address specifications whose state space cannot be efficiently encoded.

It is an object of the present invention to provide a method and tool for the efficient verification of a safeness and/or liveness property of a system such as, for instance, deadlock, livelock and/or other similar states.

It is a further object of the present invention to provide a method and tool for the verification of a safeness and/or liveness property of a system such as, for instance, deadlock, livelock and/or other similar states in systems whose state space cannot be efficiently encoded.

It is in particular an object of the invention to produce a computational device which takes less time and/or makes use of less other resources to verify a system for a safeness and/or liveness property.

## SUMMARY OF THE INVENTION

The present invention may provide a method implemented in a computational device of verifying that a system being analysed has a safeness and/or liveness property, comprising the steps of using at least statically available information to substantially reduce the work required to compute a state space describing the system being analysed by computing a reduced state space of the system, the reduced state space still provably permitting verification of the safeness or liveness property; and using the reduced state space to verify the safeness and/or liveness property, further comprising the step of: including within the definition of each new state of the reduced state space, history information about at least the mutually exclusive transitions enabled in any previous state.

The present invention may also provide a method implemented in a computational device of verifying that a system being analysed has a safeness and/or liveness property, comprising the steps of using at least statically available information to substantially reduce the work required to compute a state space describing the system being analysed by computing a reduced state space of the system, the reduced state space still provably permitting verification of the safeness or liveness property; and using the reduced state space to verify the safeness and/or liveness property, further comprising a step of determining statically the presence of a maximal conflicting transition set which is multiple enabled and whose firing will not disable any other maximal conflicting transition set either in the currently processed state or subsequently nor will disable any other transition either in the currently processed state or subsequently which is single enabled and is not in said first maximal conflicting transition set.

The above methods are also methods implemented in a computational device for modelling and simulating a technical system and for measuring the technical system for the presence of a safeness and/or liveness property.

The present invention also includes a verification tool implemented on a computational device including a memory, the verification tool being of the type wherein the system is modelled as a bounded system of finite state components and verification tool employs a reachability graph in the memory to verify that the system has a given property, comprising: a structure within the memory which identifies transitions as members of a maximal conflicting transition set which is multiple enabled and whose firing will not disable any other maximal conflicting transition set in the currently processed state or subsequently nor any other transition which is single enabled in the currently processed state or subsequently and is not in maximal conflicting transition set.

The present invention also includes a verification tool implemented on a computational device including a memory, the verification tool being of the type wherein the system is modelled as a bounded system of finite state components and verification tool employs a reachability graph in the memory to verify that the system has a given property, comprising: a structure within the memory which records history information about at least the mutually exclusive state transitions enabled in any previous state.

The present invention also includes a simulator of a system implemented on a computational device including a memory, the simulator being of the type wherein the system is modelled as a bounded system of finite state components and the simulation of the operation of the model uses a reachability graph in the memory to measure the system for the presence of a given property, comprising: a structure within the memory which records history information about at least the mutually exclusive state transitions enabled in any previous state.

The present invention also includes a simulator of a system implemented on a computational device including a memory, the simulator being of the type wherein the system is modelled as a bounded system of finite state components and the simulation of the operation of the model uses a reachability graph in the memory to measure the system for the presence of a given property, comprising: a structure within the memory which records history information about at least the mutually exclusive state transitions enabled in any previous state.

The system to be modelled and simulated is preferably a technical system such as a computer protocol, a processor protocol or a telecommunications protocol.

The present invention relates to a novel formal method, a tool or a simulator for efficiently verifying and/or measuring concurrent systems for a property of the system using a reachability graph, e.g. as modelled by a Petri net or similar, including a generalised partial-order analysis technique that can enumerate conflicting paths simultaneously, thus extending the partial-order analysis approach to tackle the combinatorial explosion caused by concurrently marked conflict places. The concurrent system to be analysed is preferably a technical protocol such as a computer, a processor or a telecommunications protocol in which the transitions of the system relate to physical movements of matter or electrical impulses and/or signals.

The present invention is based on a modified representation of markings to distinguish the different conflicting paths, in particular to preserve historical information identitying the conflicting paths. The firing rules have been modified in combination with the partial-order analysis technique to enumerate conflicting paths simultaneously. This new analysis technique can demonstrate exponential reduction in complexity, as will be illustrated by the examples.

The verification tool and method in accordance the present invention may be used within the design environment of the CoWare™ system which comprises a database compiled on a memory structure adapted for access by executable programs on a computer for generating the implementation of the heterogeneous essentially digital system, comprising a plurality of objects representing aspects of the digital system wherein the objects comprise primitive objects representing the specification of the digital system and hierarchical objects being created by the executable programs while generating the implementation of the digital system, the hierarchical objects being refinements of the primitive objects and having more detail and preserving any one of all of the aspects to thereby generate the implementation of the digital system; and further comprising relations in between the primitive objects and in between the hierarchical objects and between the primitive objects and the hierarchical objects; and further comprising functions for manipulating the objects and the relations. The system further comprises means for specifying the heterogeneous digital system comprising a plurality of behavioural and structural languages; means for simulating the heterogeneous digital system comprising a plurality of simulators for the behavioural and structural languages; means for implementing the heterogeneous digital system comprising a plurality of compilers for the behavioural and structural languages; means for allocating hardware components for an implementation of the heterogeneous digital system; means for assigning hardware subsystems and software subsystems of the heterogeneous digital system to the hardware components; means for implementing the communication between the software subsystems and the hardware subsystems, one of the aspects of the communication being represented by ports; means for encapsulating the simulators, the compilers, the hardware components, the hardware subsystems and the software subsystems whereby creating a consistent communication between the encapsulated simulators, compilers, hardware components, hardware subsystems and software subsystems; and means for creating processor models of the hardware components as objects in the database, the models comprising software models representing the software views on the hardware components and hardware models representing the hardware views on the hardware components.

The design environment may further comprises means for creating I/O scenario models of the ports as objects in the database, the I/O scenario models representing the implementation of the ports on the hardware components, the implementation comprising software subsystems, hardware subsystems, and processor models with connections therebetween.

The implementation of the communication between a first software subsystem and a first hardware subsystem in the design environment may result in the first software subsystem with a first port being replaced by a second hardware subsystem with a second port, the first port and the second port representing an essentially identical communication.

Further means for selecting I/O scenario models for the ports of the first software subsystem, means for combining the software subsystems of the selected I/O scenarios ; and means for combining the hardware subsystems of the selected I/O scenarios may be provided.

In the design environment, a first I/O scenario model can represent the connection of the first port to the second port, the connection comprising a connection of the first port to the software subsystems of the I/O scenario model, connections of the software subsystems of the I/O scenario model to the software model, connections of the hardware model to the hardware subsystems of the I/O scenario model, and a connection of the hardware subsystems of the I/O scenario model to the second port.

In the design environment, the I/O scenario models can further comprise memory mapped I/O scenarios, instruction programmed I/O scenarios, and interrupt based I/O scenarios.

The implementation may be a simulation of the digital system. The simulation can be a multi-abstraction level simulation comprising substantially simultaneous low-level and high-level simulation. The simulation can be a multi-platform simulation being executed on a plurality of computers. The simulation can be hybrid simulation comprising substantially simultaneous hardware implementations and computer simulations. The implementation can be a heterogeneous implementation comprising hardware subsystems and software subsystems, the software subsystems being executed on one or more of the hardware subsystems. The hardware subsystems can comprise any one or more of processor cores, off-the-shelf components, custom components, ASIC's, processors, or boards. The software subsystems can comprise machine instructions for the hardware subsystems.

The CoWare™ system also includes a method of making an implementation of a heterogeneous essentially digital system, comprising the steps of:

defining a first set of primitive objects representing the specification of the digital system, comprising the steps of describing the specification of the system in a plurality of processes, each process representing a functional aspect of the system, the processes being primitive objects;

defining ports and connecting the ports with channels, the ports structuring the communication between the processes, the ports and the channels being primitive objects, one process having one or more ports;

defining the communication semantics of the ports by a protocol, the protocol being a primitive object; and thereafter

creating hierarchical objects being refinements of the primitive objects and having more detail, while preserving aspects of the communication semantics; allocating one or more hardware components, the components comprising programmable processors and non-programmable processors; assigning the processes to the hardware components, the processes being assigned to a programmable processor being a software subsystem, the other processes being hardware subsystems; and selecting I/O scenario models for the ports of the software subsystem thereby connecting the ports to the interface of the programmable processor and connecting the interface of the programmable processor to second ports, the second ports representing an essentially identical communication as the ports.

The method can further comprise the step of simulating the system.

The implementation comprises hardware and software subsystems of the system, the software subsystem being executed on one or more of the hardware subsystems.

The method can comprise the step of generating a netlist comprising the layout information of the implementation.

The hardware subsystems can comprise any one or more processor cores, off-the-shelf components, custom components, ASIC's, processors, or boards.

The method can further comprise the step of refining the channel in between a first and a second port of respectively a first and a second hardware component, the first and the second port having an incompatible protocol, thereby creating a hierarchical channel, the hierarchical channel converting the first protocol into the second protocol. The method can comprise the step of refining the channels in between incompatible ports of hardware components, thereby creating hierarchical channels, and the step of generating a netlist comprising the layout information of the implementation.

The dependent claims define further individual embodiments of the invention. The present invention will now be described with reference to the following drawings.

## BRIEF DESCRIPTION OF THE DRAWINGS

Figs. 1a and 1b are schematic representations of a marked Petri net and a reachability graph, respectively.

Figs. 2a and 2b are schematic representations of a Petri net and the reachability graph, respectively obtained by partial order analysis.

Figs. 3a, 3b, 3c are successive states of a Generalised Petri Net (GPN) in accordance with the present invention, Fig. 3a being the initial state, Fig. 3b the state after firing transitions *A* and *B* simultaneously and Fig. 3c the state after firing transition *C* and Fig. 3d is the conflict table storing the conflict history information for the transitions.

Fig. 4 is the marking of a GPN according to the present invention after firing transitions *A* and *B* simultaneously.

Figs. 5a and 5b are schematic representations of a GPN to illustrate the single firing semantics in accordance with the present invention, showing in Fig. 5a the marking $m$ and in Fig. 5b the next marking $m'$.

Figs. 6a and 6b are schematic representations of conventional Petri Nets equivalent to the GPN of Fig. 5.

Figs. 7a, 7b, 7c are successive markings of a GPN with maximal conflicting sets $\{A,B\}$ and $\{C,D\}$ in accordance with the present invention, Fig. 7a showing the initial state $\langle m_0^G, r_0\rangle$, Fig. 7b the next state $\langle m_1^G, r_1\rangle = m_update(\langle m_0^G, r_0\rangle, \{A,B\})$, and Fig. 7c the next state $\langle m_2^G, r_2\rangle = m_update(\langle m_1^G, r_1\rangle, \{C,D\})$.

Figs. 8a to 8c are schematic flow diagrams of the reachability analysis in accordance with the present invention for determining a property such as deadlock.

Fig. 9 is a schematic representation of a verification device in accordance with the present invention.

Fig. 10 is schematic representation of the hardware-software co-design in accordance with the CoWare system.

Fig. 11 is a representation of the modelling and verification strategy in accordance with one embodiment of the present invention.

Fig. 12 is the representation of two process P1 and P2 in a CoWare environment.

Fig. 13 is a representation of the syntax mapping *P* applied on a) events *a* and *b* and b) their compositions in accordance with an embodiment of the present invention.

Fig. 14 is an example of a software implementation of a) the basic CoWare model, b) the Petri net model for the slave thread, c) the Petri net model for the autonomous thread and d) the Petri net model for the complete system.

Fig. 15 is a Petri net model of the processes shown in Fig. 12.

## DESCRIPTION OF THE PREFERRED EMBODIMENTS

The present invention will be described with respect to certain embodiments and with reference to certain drawings but the invention is not limited thereto but only by the claims. The present invention will be mainly described with reference to Petri nets however the invention is not limited thereto and may be applied to any suitable finite state representation. The present invention may be implemented in any suitable computational device of which a computer is only one example. The present invention may, for instance, also be implemented in a microprocessor or a semiconductor chip, for instance an application specific integrated circuit (ASIC) or similar.

A Petri net (PN) as used in the present invention may be defined as a structure that consists of a number of places, a number of transitions and a number of directed arcs and a set of rules of how the transitions may occur or "fire" in order for the system to reach the next state. An arc connects one place with one transition, or vice-versa. A place is filled with zero, one or more tokens. In a more formal setting a Petri net is a tuple

$$\Sigma = (P, T, F, m_0)$$

$$\textit{where } P \cap T = \phi \text{ (= empty set)},$$

$$F \subseteq (P \times T) \cup (T \times P) \textit{ and } m_0 : P \rightarrow \mathbb{N} \quad \text{.................. Definition 2.1}$$

In the above definition *P* denotes a set of places, *T* a set of transitions, *F* a set of directed arcs (also called a flow relation) and $m_0$ an initial marking where $m_0 : P \rightarrow \mathbb{N}$ refers to the state or marking $m_0$ being the mapping of the places *P* to the natural numbers $\mathbb{N}$. Mapping $m_0$ indicates the number of tokens in the places. The sets of places *P* and transitions *T* are disjoint, i.e. the intersection of *P* and *T* is an empty set or in other words none of the members of set *P* are also in set *T* and vice versa. In Figure 1(a), a simple Petri net (PN) is shown. The places are depicted with the open circles, the transitions are depicted with annotated bars, and the flow relation is represented by the arcs. The black dots represent tokens which are sometimes known as stones, and the initial token configuration (i.e. in which places the tokens are placed) represents the initial marking. In the following, these notations will be used consistently. For a place (or a transition) $x$, $\bullet x$ and $x \bullet$ denote the preset and postset of $x$, that are referred to as the set of input and output transitions (or places if $x$ is a transition) of $x$, respectively.

Two transitions are conflicting or are said to be in conflict when they share at least one common input place. A common input place indicates a choice within the system, i.e. starting from the common place one of the several transitions linked to the place may fire resulting in the system taking one of the several possible paths. In a maximal conflict(ing) set (MCS) all transitions that are in conflict with a transition of the set, are also included in the set, i.e.

*Let t, u ∈ T, and T' ⊆ then:*

$$conflict(t, u) \equiv (\bullet t \cap \bullet u \neq \phi) \qquad \text{Definition2.2}$$

$$conflict_set(T') \equiv (\#T' = 1) \vee (\forall t \in T' : \exists u \in T' \setminus \{t\} : conflict(t, u)) \text{ or}$$

$$conflict_set(T') \equiv \forall t \in T' : T' \setminus \{t\} \neq \phi \Rightarrow \exists u \in T' \setminus \{t\}: conflict(t, u))$$

$$mcs(T) \equiv \{T' \subseteq T | \; conflict_set(T') \wedge \forall t \in T \setminus T' : \forall u \in T' : \neg conflict(t,u)\}$$

The two transitions *t* and *u* are said to be conflicting, denoted by *conflict(t,u)*, when they have one or more input places in common so that the intersection of the input places of *t* and *u* has a value (i.e. is not equal to the empty set $\phi$). A conflict set is a set of transitions which has the following property: each member transition is in conflict with at least one other member transition provided this other member transition exists. A simple and trivial example may be used to explain conflicts: a person may have two options starting from a common position: go to work or stay at home sick - these two actions are mutually exclusive, i.e. conflicting.

A maximal conflict set *T'* is an important concept in the present invention. A conflicting set *T'* is called maximal with respect to a set of transitions *T*, when *T'* is a subset of, or equals *T*, and each transition which is a member of *T* but not of *T'* is not conflicting with any transition of *T'*. When *T* is clear from the context, a conflict set that is maximal with respect to *T* is also referred to as a maximal conflict set. The set of maximal conflict sets of a set of transitions *T*, denoted by *mcs(T)*, is defined as the set of conflict sets that are maximal with respect to *T*.

To extend the trivial example above, the person may go to work = 1, stay at home sick = 2, go on holiday = 3 or drink a cup of coffee = 4. 1 conflicts with 2 or 3 but 3 does not conflict with 2 (one can be on holiday and at home but sick). 4 does not conflict with any of 1, 2 or 3 assuming coffee can be had at home, in work or in a hotel or restaurant when on holiday. Hence, {1, 2, 3} is a maximal conflict set of the set of transitions {1, 2, 3, 4}.

Besides the structure of a Petri net, there is also an associated dynamics, i.e. how the net moves through the states. The dynamics are determined by rules. A transition is said to be enabled if it can fire. Transitions between states are dictated by the following firing rule. In the following *Mp* denotes the set of all states (markings) of a Petri net with |*P*| places.

*Let* $t \in T$ *and* $m \in Mp$.

$$enabled(t,m) \equiv \forall p \in \bullet t : m(p) \geq 1 \qquad \text{Definition2.3(enablingrule)}$$

*Let* $t \in T$ *and* $m \in Mp$ *and* $enabled(t,m) = true$.

$$nextstate(m(p),t) = \begin{cases} m(p)-1 \text{ if } p \in \bullet t \setminus t\bullet \\ m(p)+1 \text{ if } p \in \bullet t \setminus t\bullet \\ m(p) \quad otherwise \end{cases} \text{......Definition 2.4 (firing rule)}$$

Definition 2.3 states that a transition can fire if all its input places contain at least one token. Definition 2.4 states that the next marking is reached by firing a transition which removes one token from all its input places and adds a new token in all its output places, otherwise there is no change. The set of all reachable states may be represented in a reachability graph, as shown in Fig. 1(b). The reachability graph is not such a compact representation as a Petri net. In such a reachability graph all vertices correspond to a valid marking of the Petri net and all arcs correspond to a transition from one marking to another due to firing of some transition in the net. The reachability graph of a Petri net *N*, denoted as *RG(N)*, can be interpreted as the reflexive transitive closure of the next state relation defined in Definition 2.4.

Two important properties of Petri nets which are often determined are liveness and safeness. Liveness concerns the question whether a transition can ever be fired, and is opposed to deadlock. Safeness means that a place should not contain more than one token at any time. In the present invention only safe Petri nets are considered.

A straightforward approach to verification is to explicitly investigate all reachable states, i.e. by reachability analysis. Reachability analysis, also known as exhaustive simulation or state space generation is indeed a powerful formal method for detecting errors in concurrent and distributed systems that have a finite state space. Generally, there are some end states which are valid (i.e. intended) and some which are not. When the system arrives in an end state which is not a valid end state of the system, it is said to have reached a deadlock. A deadlock is said to occur when there is a reachable state from which the system (Petri Net) cannot perform any action (transition) and which is not a valid end state of the system. No deadlock means that the system never arrives in an end state that is not intended. Examining all such reachable states, however, suffers from the state explosion problem, that is an exponential increase in the number of reachable states. The source of this exponential complexity is concurrently enabled actions (transitions). In Petri net terms this is illustrated in Fig. 1 by means of an example. In the example of Fig. 1(a), a simple Petri net is depicted residing in an initial state or marking where transitions A, B and C are enabled. In this state, all three transitions can be fired separately, each firing resulting in a new state. In each of these new states, the two other transitions remain enabled and can be fired, in turn leading to two new states. In this example, we then end up with 3! (= 6) different firing sequences or interleavings, as can be seen in Fig. 1(b). This factorial blow up causes the state space explosion problem: especially for large systems that exhibit lots of concurrency, the state space can be too large with respect to the time available to complete the analysis as well as to other resources needed to inspect all states in the space, e.g. memory.

To verify the liveness properties of a Petri net, it has been shown that it is not necessary to build the complete reachability graph for a net e.g. P. Godefroid and P. Wolper, "Using Partial Orders for the Efficient Verification of Deadlock Freedom and Safety Properties", Lecture Notes in Computer Science, 575(10), pp. 332-342, Aalborg, Denmark, July 1-4 1991. Instead of constructing all interleaving execution sequences, only a few are needed to extract the external behaviour and these still cover the internal non-determinism. Continuing with the example of Fig. 1(a), suppose the system is in the (depicted) initial state where transitions *A*, *B*, *C* are all enabled. Instead of firing all transitions, in this state it is only necessary to pursue one transition, at least if liveness is the main concern of our analysis. Indeed, the firing of *A* will keep transitions *B* and *C* enabled. In turn, in the next state it is sufficient to fire only *B* for example. In summary, only one path has been selected from the full reachability graph. Replacing *N!* factorial interleaving by one linear interleaving is quite a substantial saving. The method can also be lifted to transitions that are in conflict, that is transitions that share common input places. Suppose in a certain state, *T'* is a maximal (i.e. it cannot be extended) set of conflicting transitions that are all enabled. Then it is clear that from this particular state, it is sufficient to fire only those transitions belonging to *T'* which "anticipate" all other enabled transitions. Indeed, the latter transitions remain enabled after firing the transitions of *T"*, therefore not affecting the liveness properties of the net. The method has been presented in different variants, e.g. in the paper by P. Godefroid and P. Wolper mentioned above, and A. Valmari, "A Stubborn Attack on State Explosion", 2nd Workshop on Computer Aided Verification, pp. 156-165, New Brunswick, NJ, June 18-21 1990. They are all based on the observations described above. By using partial-order semantics for state-transition based systems, the method is abstracted from the interleaving semantics. Although originally presented to preserve liveness properties, the method can also be used to deduce safeness properties of the net and is even partially applicable to model checking.

These methods, however, still have problems with concurrently enabled conflict places. Suppose a marked Petri net as shown in Fig. 2. In this example Petri net, there are *N* pairs of conflicting transitions (the marked places are called conflict places). As explained above the partial order analysis investigates only one pair of conflicting transitions. For this application, the partial-order methods compute the reachability graph depicted in Fig. 2(b). It first selects and fires $\{A_0, B_0\}$, i.e. a maximal set of conflicting transitions that is enabled, and then fires $\{A_1, B_1\}$, and so forth. Although the computed reachability graph is significantly smaller than the full reachability graph it still results in a number of states equal to $2^{N+1}$ -1. It would be desirable not to restrict the analysis to firing each transition sequentially, as with conventional firing rules of Petri nets. Instead it is preferable in accordance with the present invention to order the transitions, and evaluate points at which series of transitions can be fired, since, in accordance with the present invention, it is not necessary to consider intermediate steps, but only final reachability information.

Another approach to reachability analysis is to use Ordered Binary Decision Diagrams (OBDD's), e.g. R. R. Bryant, "Graph-based Algorithms for Boolean Function Manipulation", IEEE Transactions on Computers, 35(8) pp. 677-691, August 1986, to represent the state graph symbolically. OBDD's are known to be compact representations for symmetric functions. For applications with non-linear communication patterns, however, symbolic techniques generally perform worse as the non-linear structure makes it difficult to find a good variable ordering for the OBDD's. Thus, the state explosion problem can still be present, especially as the encoding of the transition function is based on the interleaving semantics. Recently, R. Alur, R.K. Brayton, T.A. Henzinger, S. Qadeer and S.K. Rajamani have described an approach in "Partial-order Reduction in Symbolic State Space Exploration", in the Proceedings of the International Conference on Computer Aided Verification, 1997, that incorporated partial-order reduction into an OBDD-based symbolic reachability analysis. While this method improves over standard symbolic reachability analysis, it still requires an efficient encoding of the state space, which may not exist.

As mentioned in the discussion above on the partial-order methods, for the Petri net shown in Fig. 2, the firing rules of conventional Petri nets restrict the analysis to firing each transition sequentially. In accordance with an embodiment of the present invention this problem is overcome by enumerating conflicting paths simultaneously. Simply putting a token in the output places of the fired transitions will not suffice, as this would lead to execution sequences that are not possible in the "original" reachability graph, possibly hiding the presence of deadlock situations. In accordance with an embodiment of the present invention, the representation of the markings is modified to distinguish the different conflicting paths. The present invention includes a modified Petri net model, which will be called a Generalised Petri Net (GPN), that will be described with reference to Fig. 3 first of all in an intuitive way and then more formally.

In Fig. 3(a) a simple GPN is shown; place *p*1 is filled with a "white" token, and the transitions *A*, *B*, *C* and *D* are tagged or coded with the colours "red", "green", "blue", and "yellow", respectively which are distinguished in the drawing by means of different shadings. Generalised Petri nets in accordance with the present invention should not be confused with Coloured Petri Nets, the concept of colour is introduced here merely for explanation purposes. In this initial state, both *A* and *B* are enabled, and can fire simultaneously to arrive in the state depicted in Figure 3(b). Transition *A* removes the white token from its input place *p*1, "paints" it red, and moves it to each of its output places. Thus, *p*2 and *p*3 get filled with a red token. Similarly, transition *B* removes the white token from its input place *p*1, paints it green, and moves it to its output place *p*4. At the same time a record is kept, e.g. in a table, of the fact that red and green are conflicting colours as they "code" conflicting transitions. The input places of *D*, viz. *p*3 and *p*4, contain tokens with mutual conflicting colours (as they correspond to earlier conflicting transitions). Thus, after consultation with the conflict table to check that red and green are conflicting, transition D is not allowed to fire. Transition *C*, on the other hand, can fire because its input places *p*2 and *p*3 have the same colour red. This results in the state depicted in Figure 3(c). As *C* is the only transition that is fired at this stage, there is no need for an extra colouring by *C*; the firing of *C* removes a red token from its input places *p*2 and *p*3, and puts a red token in its output place *p*5. Note that the states of Fig. 3, obtained by the method in accordance with the present invention, capture all the information that is related to the "original" reachability graph shown. This example demonstrates some of the aspects of the present invention. Firstly, some of the mutually conflicting transitions are fired simultaneously. This is not an obvious course of action as it generates states which can never occur and it defies normal logic - to take the trivial example above it means allowing the transitions of going to work and staying at home at the same time. Clearly this cannot happen under normal circumstances and must lead to totally incorrect results unless the conflict coding of the present invention is used. This coding of the mutually conflicting states, makes it possible to identify in later states the origin of the coloured tokens and to identify which transitions in the present state cannot possibly fire because their input places are "coloured" by, i.e. derive from, an earlier conflicting situation.

This approach is compatible with the techniques of the partial-order methods described above. For instance consider the example Petri net shown in Figure 2(a). Following the reasoning of the partial-order methods, in this state it is sufficient to fire only those transitions that belong to one of the *N* concurrently enabled conflicting sets. In turn, in the next states, another conflicting set of transitions can then be selected. When combined with the approach in accordance with the present invention of firing conflicting sets of transitions simultaneously, this comes down to only enumerating one possible interleaving or alternatively, firing all transitions at the same time. For this example, the number of states reduces from $2^{\{N+1\}}$ -1 to only 2 computed states. In the following, this intuitive introduction to Generalised Petri nets is described in a more formal way.

In a formal setting, the "colour coding", i.e. the historical information about conflicting origins may be represented not by tokens as in conventional Petri nets, but by transition sets to distinguish the different conflicting paths. For example, the system in Figure 3(d) included a conflicting colour relation, i.e. a statement that the colours "red" and "green" are indeed conflicting. In the following, this colour relation will be represented - in the inverse sense - by a set of valid transition sets. This will be explained with reference to the trivial example mentioned above. Suppose one transition which derives from "staying at home sick", = 2, is "falling asleep", = 5, (maybe a healthy thing to do in the circumstances) and another transition derived from "going to work", = 1, is "driving home", = 6, then firing 5 and 6 results in a serious car accident (falling asleep while driving home). However, it is clear that 5 and 6 may not fire as 5 is derived from 2 and 6 is derived from 1, and 1 and 2 can never occur simultaneously in real life so that their derivatives can also not occur simultaneously. The history information incorporated into each new state about previous conflicting transitions in accordance with the present invention is used to determine which sets of transitions are valid ones. For instance in accordance with one embodiment of the present invention this history information is used to restrict the set of transitions in each new state definition to only the valid ones, i.e. the invalid ones are eliminated. Alternatively, according to another less preferred embodiment of the present invention, the history information may be kept in the form of a conflict table (as shown schematically in Fig. 3d), and this information used to decide if a particular transition is valid or not.

A generalised Petri net (GPN) in accordance with the present invention may be defined as follows:

*A Generalised Petri net is a tuple* $\langle P, T, F, m_0, r_0 \rangle$ *with* $P \cap T = \phi$,

$$F \subseteq (P \times T) \cup (T \times P),\ m_0 : P \rightarrow 2^{r_0} \text{ the initial marking and } r_0 \subseteq 2^T \text{ the valid transition sets} \qquad \text{Definition3.1(GeneralisedPetriNet)}$$

Accordingly, a Generalised Petri net (GPN) is a structure that consists of a number of places, a number transitions, and a number of directed arcs. An arc connects one place with one transition, or vice-versa. Each place is filled with a set (rather than just a token) that is either empty, or contains a number of transition sets. The transition sets which may fill a place in accordance with the present invention belong to the set of valid transition sets as defined by the GPN under consideration. In a formal setting, a GPN is a tuple $\langle P, T, F, m_0, r_0 \rangle$, where $P$ represents the set of places, $T$ the set of transitions, $F$ the set of directed arcs or flow relation, $r_0$ the set of valid transition sets, and $m_0$ the initial marking, where

$$m_0 : P \rightarrow 2^{r_0}$$

refers to the marking $m_0$ being the mapping of places $P$ to the subsets of $r_0$, thus indicating that there are only valid transition sets in the places.

Besides the structure of the GPN there is also an associated dynamics. A state is a tuple $\langle m, r \rangle$ where $m$ denotes the marking or the mapping of the places to the subsets of the valid transition sets, i.e.

$$P \rightarrow 2^{r_0},$$

$r$ denoting the set of all valid transition sets. In the following $P$ represents a set of places, $T$ a set of transitions, and $S_P^T$ the set of all states of a GPN with $|P|$ places and $|T|$ transitions.

To clarify the above, imagine an example GPN state as illustrated in Fig. 4. In this example, a GPN state is shown after firing $A$ and $B$ simultaneously. The places $p2$ and $p3$ get filled with the sets $\{\{A\}\}$ and $\{\{B\}\}$, respectively, while place $p0$ becomes empty or more formally contains an empty set. The need for a notation which deals with more than one set is clear when looking at place $p1$. This place has two incoming paths, and as a result gets "filled" with two sets $\{A\}$ and $\{B\}$. Associated with this depicted state, there is also a set of valid sets $r = \{\{A\},\{B\}\}$. For this example, $\{A,B\}$ will not be a valid set and therefore not included in $r$ because $A$ and $B$ are conflicting transitions. Intuitively, a valid set of transitions denotes a set of transitions that can "act" together to enable and fire a certain transition. Imagine a transition $E$ that has $p2$ and $p3$ as its input places. The conflicting transitions $A$ and $B$ cannot act together to fire transition $E$, and therefore are not included in the set of valid sets. The information stored with respect to the origins of each place filling can then be used to "guard" the enabling of transition $E$ in accordance with the present invention, effectively preventing the transition $E$ from being fired.

The conventional PN enabling condition and firing rules have to be changed in accordance with the present invention. With reference to Fig. 3, the actions of firing $A$ and $B$ simultaneously, and the firing of $C$, are treated differently. In the former case, the tokens that arrive in the output places of $A$ and $B$ are "coloured", i.e. coded so as to distinguish their mutually exclusive origin. In the latter case, no extra colouring (coding) is performed, as there is no conflicting transition that may be fired at the same time (transition $D$ is prevented from firing in accordance with the present invention as its input places $p3$ and $p4$ contain tokens with mutually conflicting colours, viz. read and green, respectively). Thus, for the firing of $C$, a straightforward extension of the "original" PN firing rule can be applied: a red token is removed from each of its input places $p2$ and $p3$, and put into its output place p5. In accordance with the present invention two firing semantics are preferably defined, namely multiple firing semantics and single firing semantics.

According to the single firing semantics, a transition can fire once it is single enabled. The marking of a place in a GPN in accordance with the present invention can be interpreted as representing the sequence of all possible histories of transition firings that lead to the involved marking (all this information may be stored as a set). A transition is single enabled when its input places contain a "common" history, or alternatively, when the intersection of the transition sets, contained in its input places, is not empty. If so, the firing of that transition will remove that common history from its input places, and put it in its output places. The single enabling rule may be defined as follows:

Let $\langle m,r \rangle \in S_P{}^T$. $t \in T$.

$$s_enabled(\langle m,r\rangle, t) \equiv \bigcap_{p\in\bullet t} m(p) \cap r \quad \text{......Definition 3.2 (single enabling rule)}$$

According to this definition, if $\langle m,r \rangle$ is a state of a GPN, and $t$ is a transition of that GPN, then $s_enabled(\langle m,r\rangle, t)$ is defined to be the set of valid transition sets that are common to all input places of $t$. A transition $t$ is said to be single enabled in a state $\langle m,r \rangle$, if and only if $s_enabled(t,\langle m,r\rangle)$ is not empty.

Suppose a GPN is in a state depicted in Figure 5(a) having a marking $m$ with valid sets $r = \{\{A\}, \{B\}\}$. The set $r$ denotes the set of valid transition sets, its derivation will be described later in more detail. For now, it suffices to know that $\{A,B\}$ is not a valid set because $A$ and $B$ are conflicting transitions. Transition $B$ is not single-enabled as $s_enabled(B,\langle m,r\rangle) = \{\}$, i.e. the empty set. Transition $A$, on the other hand, is single-enabled as $s_enabled(A,\langle m,r\rangle) = \{\{A\}\}$. Thus, transition $A$ can fire to go to the next state, according to the single firing rule which may be defined as follows.

Let $s = \langle m,r\rangle \in S_P{}^T$, $t \in T$. $s_update(t,\langle m,r\rangle) \equiv \langle m',r\rangle$ where

$$m'(p) = \begin{cases} m(p) \setminus s_enabled(t,s) \; if \; p \in \bullet t \setminus t\bullet \\ m(p) \cup s_enabled(t,s) \; if \; p \in t\bullet \setminus \bullet t \\ m(p) \quad otherwise \end{cases}$$

..................**Definition 3.3 (single firing rule)**

According to this rule, if $\langle m,r \rangle$ is a state of a GPN, and $t$ is a transition of this GPN and if this transition $t$ is single-enabled (i.e. $s_enabled,(t,\langle m,r\rangle)$ is not empty), then transition $t$ can fire in order to go to the next state. The next state, represented by $s_update(t,\langle m,r\rangle)$, differs from the previous state $\langle m,r \rangle$ in that the $s_enabled(t,\langle m,r\rangle)$ is removed from all input places of $t$ and the set $s_enabled(t,\langle m,r\rangle)$ is added to the output places of $t$.

Continuing with the example of Fig. 5(a), if $A$ fires the net arrives in the next state depicted in Fig 5(b). Following definition 3.3 the set $s_enabled(A,\langle m,r\rangle) = \{\{A\}\}$ is removed from its input places $p0$ and $p1$, and added to its output place $p3$. Note that this firing rule is still "consistent" with the conventional PN firing rule, defined in Definition 2.4. Imagine, for example, two conventional PN markings by placing in Fig. 5(a) a token in each place containing $\{A\}$ or $\{B\}$, respectively. This results in the two conventional PN markings shown in Fig. 6(a). An analogous mapping of the GPN marking depicted in Fig. 5(b), results in the two conventional PN markings shown in Fig. 6(b). Note that these markings are exactly those markings that could be reached from the markings shown in Fig. 6(a) by firing transition A using the conventional PN firing rule. The above mapping can be formally defined as follows.

*Let* $\langle m,r\rangle \in S_P^T$.

$$mapping(\langle m,r\rangle) \equiv \{m' \in 2^P \mid \exists v \in r : m' = \{p \in P \mid v \in m(p)\}\} \qquad \text{Definition3.4}$$

According to this definition, if $\langle m,r\rangle$ is a state of a GPN, then this GPN state can be mapped to a set of states of a conventional Petri Net (PN) with same structure. This set of PN states denoted as a mapping ($\langle m,r\rangle$) is defined as follows. For each element $s$ of mapping ($\langle m,r\rangle$) there exists a valid transition set $v$ (that is $v$ is an element of $r$) so that $s$ corresponds to the PN state obtained from GPN state $\langle m,r\rangle$ by placing one token in each place containing $v$ and placing zero tokens in each place not containing $v$.

Note that the marking of a safe PN can be represented by a set of places $m$, where $pi \in m$ indicates that there is a token in the $i^{th}$ place $pi$. As a result, the mapping function can be interpreted as mapping between a state of a GPN and a set of states of a safe PN with the same structure. For Fig. 5, this gives $mapping(\langle m,r\rangle) = \{\{p0,p1\},\{p0,p2\}\}$ and $mapping(\langle m',r\rangle) = \{\{p3\},\{p0,p2\}\}$.

One aspect of the present invention is the multiple firing semantics. In accordance with an embodiment of the present invention, a set of transitions that may be conflicting can be fired simultaneously, provided that each transition is multiple enabled. The multiple enabling rule in accordance with the present invention may be defined as follows:

*Let* $s = \langle m,r\rangle \in S_P^T$, $t \in T$ *and* $T' \subseteq T$.

$$m_enabled(t, s) \equiv \{v \in \bigcap_{p \in \bullet t} m(p_i) \mid t \in v\}$$

$$m_enabled(T', s) \equiv \forall t \in T' : m_enabled(t, s) \neq \phi \quad \ldots\ldots$$

.......**Definition 3.5 (multiple enabling rule)**

According to this rule if $\langle m,r\rangle$ is a state of a GPN, and $t$ is a transition of this GPN, then $m_enabled(t,\langle m,r\rangle)$ is defined to be the set of valid transition sets that are common in all input places of $t$, and that contains the transition $t$. A transition $t$ is said to be multiple enabled in state $\langle m,r\rangle$ if and only if $m_enabled(t,\langle m,r\rangle)$ is not empty. A set of transitions $T'$ is said to be a multiple enabled set in state $\langle m,r\rangle$ denoted by $m_enabled(T', \langle m,r\rangle)$, if and only if every transition of $T'$ is multiple enabled in state $\langle m,r\rangle$.

Suppose a GPN in a state depicted in Fig. 7(a) which includes maximal conflicting sets $\{A, B\}$ and $\{C,D\}$. As indicated above, the derivation of the set $r_0$ of valid transition sets will be described later in more detail. For now, it suffices to know that $\{A,B\}$ and $\{C,D\}$ cannot be included in $r_0$, because $A$ and $B$, as well as $C$ and $D$ are conflicting transitions. A transition $t$ is multiple enabled in a state $\langle m,r\rangle$ in accordance with the present invention if $m_enabled(t,\langle m,r\rangle) \neq \phi$. Transitions $A$ and $B$ are then multiple enabled in the depicted state $\langle m_0^G,r_0\rangle$ as $m_enabled(A,\langle m_0^G,r_0\rangle) = \{\{A,C\},\{A,D\}\} \neq \phi$, and $m_enabled(B,\langle m_0^G,r_0\rangle) = \{\{B,C\},\{B,D\}\} \neq \phi$. Note that when a transition is multiple enabled, it is also single enabled (the reverse, however, is not always true). Thus, in the state $\langle m_0^G,r_0\rangle$ both $A$ and $B$ are multiple enabled, and can be fired simultaneously in accordance with the present invention, following the multiple firing rule, defined as follows.

*Let* $s = \langle m,r\rangle \in S_P^T$, $T' \in mcs(T)$ *such that* $m_enabled(T',s) = true$.

$$m_update(\langle m,r\rangle,T') \equiv \langle m',r'\rangle, \qquad where\ m'(p) =$$

$$\begin{cases} ((m,p) \setminus \bigcup_{t\in T'\cap p\bullet} m_enabled(t,s)) \cap r' & p \in \bullet T' \setminus T'\bullet \\ ((m,p) \cup \bigcup_{t\in T'\cap \bullet p} m_enabled(t,s)) \cap r' & p \in T'\bullet \setminus \bullet T' \\ ((m,p) \setminus \bigcup_{t\in T'\cap p\bullet} m_enabled(t,s) \cup \bigcup_{t\in T'\cap \bullet p} m_enabled(t,s)) \cap r' & p \in \bullet T' \cap T'\bullet \\ (m,p) \cap r' & otherwise. \end{cases}$$

$$and \qquad r' = \bigcup_{t\in T\setminus T'} s_enabled(t,s) \cup \bigcup_{t\in T'} m_enabled(t,s) \qquad .....\text{Definition 3.6}$$

According to definition 3.6, let $\langle m,r\rangle$ be a state of a GPN and $T'$ be a maximal conflicting set of transitions that is multiple enabled in $\langle m,r\rangle$. Firing $T'$ according to the multiple firing rule results in a new state denoted by *m_update* ($\langle m,r\rangle$, $T'$) that differs from $\langle m,r\rangle$ in that:

1) for every transition $t'$ of $T'$ *m_enabled*($t'\langle m,r\rangle$) is removed from all input places of $t'$ and added to its output places, and
2) the new set of valid transition sets is obtained by taking the union of all sets *s_enabled*($t''$;$\langle m,r\rangle$), for $t''$ not in $T'$ and all sets *m_enabled*($t'$,$\langle m,r\rangle$) for $t'$ in $T'$.

Turning to the example of Fig. 7(a), the simultaneous firing of transitions $A$ and $B$ moves *m_enabled*($A$,$\langle m_0^G$,$r_0\rangle$) which equals {{$A$,$C$},{$A$,$D$}} and *m_enabled*($B$,$\langle m_0^G$,$r_0\rangle$) (which equals {$B$,$C$},{$B$,$D$}}) from their common input place $p0$, to their output places $p1$ and $p2$, respectively. The state $\langle m_1^G$,$r_1\rangle$ reached is depicted in Fig. 7(b). The updating of the set of the valid sets has no effect in this case, as $r_1 = r_0$. As shown for the single firing semantics, one can also observe the consistency of the multiple firing rule of the present invention with conventional PN dynamics. Indeed, as *mapping*($\langle m_0^G$,$r_0\rangle$) = {{$p0$,$p3$}}, marking $m_0^G$ can be mapped to the marking of a conventional (safe) PN where places $p0$ and $p3$ contain a token. Marking $m_1^G$, however, can be mapped to two conventional PN markings *mapping*($\langle m_1^G$,$r_1\rangle$)) ={{$p1$,$p3$},{$p2$,$p3$}}. Note that the latter markings can be reached from {{$p0$,$p3$}} by separately firing $A$ and $B$ using the conventional PN firing rule.

The same observation can be made when going to the next state; transitions $C$ and $D$ are both multiple enabled in state $\langle m_1^G$,$r_1\rangle$ and can be fired simultaneously to go to the next state $\langle m_2^G$,$r_2\rangle$, depicted in Fig. 7(c). Due to the extra conditioning of $r_1$ by *m_update*, the new set of valid sets now becomes $r_2$ ={{$A$,$C$},{$B$,$D$}}. As a result, mapping ($\langle m_2^G$,$r_2\rangle$) = {{ $p5$}}, and the new state can be mapped to the marking of a conventional (safe) PN where only place $p5$ contains a token; i.e. the marking that can be reached from mapping ($m_1^G$,$r_1$) = {{$p1$,$p3$},{$p2$,$p3$}} by firing $C$ and $D$ using the conventional PN firing rule. The extra conditioning of the set of valid sets rules out {$A$,$D$} and {$B$,$C$}, in fact modelling an "extended conflict" relation between $A$ and $D$, and between $B$ and $C$, respectively. Indeed, if $A$($B$) precedes $C$($D$) and $C$ conflicts with $D$, then $A$($B$) conflicts with $D$($C$) and {$A$,$D$}({$B$,$C$}) cannot be included in any valid set.

Suppose now a safe conventional PN $N = \langle P,T,F,m_0\rangle$ and a Generalised Petri net with the same structure $N^G = \langle P,T,F,m_0^G,r_0\rangle$ with:

$$m_0^G(p) = \begin{cases} r_0 & \text{if } p \in m_0 \\ \{\} & \text{otherwise} \end{cases}$$

$$r_0 = \{v \in 2^T | \forall t, u \in T: conflict(t,u) \Rightarrow \{t,u\} \not\subseteq v\}$$

then it is clear that mapping $(m_0^G, r_0) = \{m_0\}$ and no two conflicting transitions can be part of any valid set. The flow diagram of the reachability analysis in accordance with the present invention is shown in Fig. 8. continued as follows. In state $\langle m_0^G, r_0 \rangle$ we search for candidate Maximal Conflicting Sets (MCS's). A candidate MCS $T'$ accordance with the present invention must be multiple enabled, and firing $T'$ will not disable any other MCS that was already multiple enabled in the present state or subsequently, as well as any other transition $t$ not in $T'$ that was single enabled in the present state or subsequently. As a result, the same reduction techniques of the partial-order methods can be applied: selecting only one interleaving sequence, or alternatively, firing all candidate MCS's at the same time and postponing the possible firing of the other transitions to a future state. Moreover, one is guaranteed that the reached state can be mapped to a set of states of the "original" reachability graph $RG(N)$.

If in state $\langle m_0^G, r_0 \rangle$ no candidate MCS's can be found, the method in accordance with the present invention falls back on the single firing semantics and partial-order reductions are applied, if possible. Similarly, with the single firing rule, it is guaranteed that the method in accordance with the present invention is "in track" with conventional PN dynamics. The same reasoning applies to all next reachable states

A property that is often checked for in a system, e.g. a communications protocol, is the freedom from deadlock. In accordance with the present invention, the definition of a deadlock may be characterised by:

$$deadlock(\langle m^G, r \rangle) \Leftrightarrow \exists m \in mapping(m^G r) : \forall t \in T : \neg enabled(t,m)$$

The above formula may be understood as follows. From the above discussion, a GPN state $s$ an be mapped to a set of states s" of a safe Petri Net with the same structure. Let this set of states s" be the set of PN states equivalent to $s$. Then, a GPN state is defined to be in a deadlock state in accordance with the present invention if there exists at least one state $s'$ within the set of PN states s" equivalent to $s$, from where no transitions can be fired using the conventional PN firing rule (i.e. $s'$ is a deadlock state in the conventional PN sense).
Effectively, this reduces to checking upon:

$$\sum_{t \in T} s_enabled(t, \langle m, r \rangle) \neq r$$

This formula can be understood as follows. Let $\langle m, r \rangle$ be a GPN state. For each element s of $mapping(m, r)$ (i.e. $s$ is a conventional Petri Net (PN) state equivalent to $\langle m,r \rangle$) there exists a valid transition set $v$ (i.e. an element of the set of all valid transition sets $r$) so that $s$ corresponds to the PN state obtained from GPN state $\langle m,r \rangle$ by placing one token in each place containing $v$ and placing zero tokens in each place not containing $v$. Note also that $s_enabled(t, \langle m, r \rangle)$ represents the set of transition sets that are present in all the input places of $t$, and thus indirectly the set of conventional PN states in which transition $t$ is enabled according to the conventional PN firing rule. Then, if the above equation holds, this means that there exists a valid transition set $v$, that is not present in all the input places of any transition $t$ of $T$. In other words, $v$ corresponds to a conventional PN state equivalent to GPN state $\langle m, r \rangle$ from where no transitions can be fired using the conventional PN firing rule and thus $\langle m, r \rangle$ is a deadlock state in accordance with the present invention.

The flow diagram of the reachability analysis in accordance with an embodiment of the present invention for determining the property deadlock is shown in Figs. 8a to c. Fig. 8c shows a non-limiting overview of an arbitrary portion of the verification procedure in accordance with the present invention which will be called a routine REACH. The verification procedure in accordance with the present embodiment of the invention takes as its input any suitable system description. Preferably, the system description is a Petri Net representation. For instance, the article entitled "Derivation of Formal Representations from Process-based Specification and Implementation Models" by S. Vercauteren, D. Verkest, G. de long, and Bill Lin, Proc. of the International Symposium on System Synthesis, pp 16-23, September 1997, describes how an embedded system can be formally represented by a Petri net formalism. In this article a CSP/CCS-like process calculus is proposed as an intermediate model to map between language-level constructs of process-based specification and implementation models and Petri Net operations. The proposed method is an elegant translation scheme to generate Petri nets starting from the intermediate process expressions. Hence, any embedded system can serve as an appropriate system description.

As shown in Fig. 8c in overview, the initial state *s*0 is loaded into a suitable computational device, e.g. a computer. From state *s*0 the routine REACH is called and the sub-routines which will be described in more detail below with respect to Fig. 8b process the initial state *s*0. At some point in the REACH routine a new state *s*1 is reached. The complete state of *s*0 is stored at this point and the routine REACH is called for state *s*1. As shown in Fig. 8c, state *s*1 is processed until new state *s*2. The complete state of *s*1 is stored and REACH is called for sate *s*2. Similarly, a new state *s*3 is reached, the complete state of *s*2 is stored and REACH is called for *s*3. Eventually the processing of state *s*3 is complete and the routine reaches a RETURN statement. At this point the routine returns to the last processed state, here *s*2 which is continued where it left off This processing may generate a further new state *s*4. Again the complete state of *s*2 is stored and REACH is called for *s*4. Once processing of *s*4 is complete, the verification procedure returns to state *s*2 and the processing continued in this state. At some point the processing of state *s*2 is complete, and the routine returns to *s*1. This procedure is repeated until the verification procedure returns to state *s*0. Processing of state *s*0 is continued until state *s*5 is reached. At this point, REACH would be called fro *s*5 and so on. When the processing of all states has been completed including that of *s*0, the routine returns to the starting position and ends. If a deadlock is determined during the processing this is reported and the and maybe stopped or may continue with the processing of state s-1.

Now the detailed procedure in accordance with this embodiment will be described with reference to Figs. 8a and 8b. Starting from step 100, the procedure REACH is called in step 105 with its argument being the initial state *s*0 (we say REACH is called from *s*0). If the procedure returns from REACH to *s*0 (i.e. no deadlock has been determined and all states have been examined and REACH has reached one of steps 170, 190 or 210 of Fig. 8b) and all of the state *s*0 has been analysed, the procedure goes to step 220.

The routine REACH for an arbitrary state *s* will now be described with reference to Fig. 8b. It will be assumed that the state s has been created in the state s-1. Starting from state *s*, all single-enabled transitions are searched in step 110. If no such transitions are found then the system has reached deadlock as determined in step 115 and reported in step 120. If there are single-enabled transitions these form the set *trans.* Within *trans*, a search is made in step 125 for "candidate maximal conflicting sets". A candidate-mcs in accordance with the present invention must be multiple-enabled and firing the set will not disable any other maximal conflicting set that is multiple enabled in the present state or subsequently, as well as not disabling any other transition that is not in the candidate-mcs and is (only) single enabled in the present state or subsequently. Such a candidate-mcs may be described as being independent and this independence is determined from the information statically available at this moment in time. Let *candidate-mcs* denote the union of all such candidate maximal conflicting sets. If such a *candidate-mc*s is found in step 130, the procedure moves to step 135 and the set of transitions *trans* is reduced by removing the transitions of *candidate-mcs* from *trans* and a state *s'* is created by firing the transitions of *candidate-mcs* using the multiple firing rule. In step 140, if the new state *s'* is determined as a state not already in the RG (reachability graph), then the new state *s'* is added to the reachability graph (RG) and the procedure REACH is called from *s'* in step 120. As explained with respect to Fig. 8c, the procedure REACH continues with the analysis of *s'* and any states derived therefrom and returns to from s' to *s* at some later time (i.e. when REACH(s') has reached one of the steps 170, 190 or 210). Processing of s continues with step 210, and the procedure returns to the processing of the state s-1.

If the new state *s'* is already a member of RG (yes in step 140), the analysis continues with step 145 in which a search is made for any maximal conflicting sets *mcs* in *trans*, viz. those that are not in *candidate-mcs*. If such an *mcs* is found (yes in step 145), and letting *T'* denote this *mcs*, the analysis proceeds with step 150 in which the set of transitions *trans* is reduced by removing the transitions of *T'* from *trans*, the process variabl*e newstate* is to False and each transition in the *mcs T'* is taken in sequence, as known generally from partial order analysis. Each transition *t* of *T'* is fired using the single firing rule which results in a new state *s".* In step 150, it is determined if the state *s"* is already in the RG, if yes, the the next transtion of *T'* is fired and so on. If no, the state *s"* is added to the RG, the variable *newstate* is set to True and the procedure REACH is called from state *s".* When returining from *s",* (i.e. REACH(*s")* has reached one of steps 170, 190 or 210), the next transitio*n t* of *T'* (state *s*) is explored. Finally, when all the transitions of *T'* have been explored, the procedure arrives at step 180. If the variable *newstate* is found to be set to False in this step, the procedure returns to step 145. If set to True, the procedure arrives at step 190 and returns from state *s* to state s-1.

If in any step 145 no *mcs* is found which belongs to *trans*, each single-enabled transition *t* of *trans* is fired in step 160 in accordance with the single firing rule which results in the state *s'''.* If state *s'''* is already in RG, the analysis proceeds with the next transition *t* of *trans*. If not, the state *s'''* is added to the RG and the procedure REACH is called from state *s'''.* When returining from *s''',* (i.e. REACH(*s''')* has reached one of steps 170, 190 or 210), the next transition *t* of *trans* (state *s*) is explored. Finally, when all the transitions of *trans* have been explored, the procedure arrives at step 170 and returns from state *s* to state s-1.

If in steps 125, 130 no *candidate-mcs* is found, the analysis proceeds with step 145 as detailed above.

The present invention may be implemented in a verification system or simulator 200 such as shown schematically in Fig 9. Verification system 200 takes as its input a suitable system description 202 and a suitable description 204 of the required property of the system, e.g. deadlock. Preferably, the system description is made using the CPS/CCS-like process calculus mentioned above. The required property 204 and the system description 202 are input into a verifier 206 in accordance with the present invention. Verifier 206 may be any suitable computational device including a processor of which a computer is only one example. For instance, verifier 206 may include a multi-processor architecture in which each processor is designd to execute REACH for only one state. Each processor may have some memory and may have access to external memory, e.g. a hard disc. As each new state is generated, a new processor executes REACH for the new state. Verifier 206 may also include a verifier generator 210 which generates a verifier program from the system description 202 and the required property 204. The execution of the verifier program verifies whether the system description 202 has the property required and the output of the verifier 206 may be a report 208. The required property is determined by reachability analysis performed on the states of the system to be verified in accordance with the procedure described above for REACH. In the course of the analysis, the verifier 206 uses statically and dynamically available information to construct a reduced state space which contains a reachability graph 220. This is achieved using the method detailed above in which the set of single-enabled transitions *trans* is stored in memory 214 and processed in verifier 206, the candidate maximal conflicting sets (*candidate-mcs*) are stored in memory 218 and processed, and the remaining *mcs* which are not *candidate-mcs* are stored in memory 216 and processed. A record of conflicting transitions, alternatively, and preferably, the set of valid transistion sets *r* (depending on the exact implementation of the present invention) necessary for determining the valid transition sets in any new state, is stored in memory 212 and updated state-by-state during the analysis.

An example will now be described of how the verification tool in accordance with the present invention may included within a more generalised system model such as the CoWare™ system which is described in EP-A-772 140 from which further details of this system may be obtained.

CoWare™ is a design methodology and a design environment for a hardware-software system co-design environment, in particular a hardware-software co-design environment and design methodology based on a data-model that allows to specify, simulate, and synthesise heterogeneous hardware-software architectures from a heterogeneous specification. The environment and the methodology are based on the principle of encapsulation of existing hardware and software compilers and allow for the interactive synthesis of hardware-software interfaces.

CoWare™ provides a design environment and a design methodology meeting the requirements of modularity, encapsulation of different description languages, modelling from a heterogeneous conceptual specification to a resulting heterogeneous architecture and all refinements steps in-between, modelling capabilities for off-the-shelf components and the associated design environments, separation between functional and communication behaviour and processor independent interface synthesis is disclosed.

It is to be understood that the concept refinement means converting or translating or transforming a specification of an electronic system into an implementation. The implementation can be an architecture of components that has the same behaviour as the specification or that executes the specification. The implementation can also be an added development in the chain leading to a final implementation. Adding detail means that an implementation is made more specific or concrete as a result of an implementation decision on a previous level in the chain leading to a final implementation. To detail can also mean adding a material object such as a specific component or a specific communication in-between components, as opposed to an abstract aspect on a previous level in the chain leading to a final implementation. Other instances of the concept refinement and of the concept detail are to be found in the sequel.

Fig. 10 shows the architecture of the CoWare system. The CoWare system supports four major design activities: co-specification 8, co-simulation 9, co-synthesis 10 and interface synthesis 11. The input is a heterogeneous specification of an electronic system, the output 12 is a netlist for prior-art commercial tools for the generation of the implementation layout. The output preferably comprises structural VHDL or Verilog and machine code for the programmable processors.

The CoWare design environment is implemented on top of a data model in which modularity is provided by means of processes. Processes contain host language encapsulations which are used to describe the system components. Communication between processes takes place through a behavioural interface comprising ports. For two processes to be able to communicate, their ports must be connected with a channel. The interprocess communication semantics is based on the concept of the Remote Procedure Call (RPC). The data model is hierarchically structured and allows to refine channels, ports, and protocols into lower level objects, adding detail. We refer to the most abstract object as a primitive object. An object that contains more implementation detail, is referred to as a hierarchical object.

A process is a container for a number of host language encapsulations of a component. A single process can have multiple host language encapsulations describing different implementations for the same component, or for the same component represented at different abstraction levels.

A host language encapsulation describes a component in a specific host language. Preferably C, C++, DFL, VHDL and Verilog are supported host languages. A CoWare language encapsulation is used to describe the system's structure. In a CoWare language encapsulation, one can instantiate processes and connect their ports with channels.

Other host language encapsulations comprise context and a number of threads. The context and thread contain code written in the host language of the encapsulation. The context contains code that is common to all threads in the encapsulation, i.e. variables/signals and functions as allowed by the semantics of the host language. As such the context provides for inter-thread (intra-process) communication.

Each primitive CoWare process (symbolised by an ellipse 13 in Fig. 10) encapsulates concurrent program threads in a host language of choice. Concurrent threads communicate over shared memory inside a process. Inter-process communication is over uni-directional channels using a Remote Procedural Call (RPC) protocol.

Notice that in this way heterogeneous specification is supported : both hardware and software aspects, structural and behavioural aspects, and different specification paradigms (data-flow, control-flow, ...) can be combined.

Co-specification allows to describe a functional specification based on the concept of communicating CoWare processes.

An important concept of CoWare is that basically no distinction is made between co-simulation and co-synthesis. Both are based on the concept of refining the specification for implementation, re-using existing compilers, emulators, and simulation processes.

In refinement by co-synthesis the designer performs an interactive coarse partitioning of the specifications over a user allocated architecture. This leads to a merger of component compiler consistent processes to be mapped on the same component. Component compiler consistent processes have an encapsulation in the same host language. Merging consists of in-lining the RPC calls between the processes and leads to the mapping of the concurrent threads in the processes on a processor re-using existing component compilers 14, 15, 16, 17, 18, 19 and the refinement of the communication between processes into hardware and software communication protocols that implements it. The implementation of concurrent threads and intra-process communication may be taken care of by using Real-Time Operating Systems (RTOS), micro-kernels or software synthesis in case of programmable processors or by providing a library based communication protocol shell around the existing hardware synthesis tools. Refinement of the inter-process communication means again a refinement of the primitive RPC communication by expanding the communication ports into implementable protocols available in a protocol library 20. It is also possible to assign channel processes to abstract channels.

Finally, there is a synthesis of hardware-hardware and hardware-software interfaces, including the generation of the software drivers in programmable processors.

After the compilation of all components, all hardware is available as structural VHDL or a similar language and all software for the processors is in C or in another high level language which can be compiled on the host compiler of the programmable components. The final step is to link all the synthesis and hardware descriptions to drive commercial back-end tools to generate a layout for a chip.

The present invention provides a verifying tool for the behaviour of a concurrent system such as CoWare which may be applied at any stage of the design process. A major problem when using Petri nets as a model for verification, is the lack of a formal mapping between language-level constructs and Petri net operations. In accordance with one embodiment of the present invention such a formal mapping is provided using a process calculus as an intermediate model. The underlying idea is that many of the existing process-based specification languages (e.g. CoWare) can be translated to what may be called an "intermediate code" of process calculus, which can subsequently be translated into a Petri net representation by applying a syntax-directed mapping scheme. At the Petri net level, existing formal verification techniques can then be used. A Generalised Petri Net representation in accordance with the present invention is preferably used. The proposed verification flow is depicted graphically in Fig. 11. For any stage 1-3 of the design process between the initial specification 1 and the final implementation 3, the verification engine 6 in accordance with the present invention may be used to check for deadlock of a Petri net representation 5 of the current state of the design, representation 5 having been derived from the actual state 1 - 3 by means of process calculus 4.

In accordance with one embodiment of the present invention the formal definition of a process calculus is facilitated by the fact that both the co-specification and co-implementation model to be verified are based on the same heterogeneous process concept and concurrency model, i.e. rendezvous, but the invention is not limited thereto. In the rendezvous concurrency model two (or more) concurrent sequential processes proceed autonomously, but co-ordinate at certain points in their control flow, so that they are simultaneously at specified points.

The model in accordance with the present invention focuses on communication behaviour, can express sequencing, deterministic and non-deterministic choice, parallelism, as well as the interrupt behaviour of today's processors, and supports the rendezvous concurrency model. The basic entity is a thread, that is described in a specific host language (for example, C or VHDL). Threads are sequential, and interact via point-to-point communication channels. Due to conditional clauses, the threads can also have different "streams" of possible behaviour (i.e. choice). In accordance with the present invention implementation can be seen as just one stage in the design process, that is it is a special case of specification. Therefore, the specification characteristics that are stated above apply to the implementation as well. Heterogeneous implementations, however, have some distinct features that lead to extra requirements on the model to be defined. During implementation, processes (threads) are refined to a lower level of abstraction, and extra processes are added. Extra processes that require some special attention are the processor cores themselves, as well as their corresponding hardware/software interfaces. When designing an embedded system, a lot of problems occur at these hardware-software interfaces. One approach is that the hardware-software interface is assembled by selecting and combining I/O scenarios from a library. Individual I/O scenarios are correct by construction. However, when assembling these scenarios to construct the complete interface, subtle deadlock problems may arise. The present invention includes the formal modelling of the complete hardware-software interface, including the processor core, run-time operating system, hardware and software device drivers, etc.

When working with a processor core, an embedded software design usually makes frequent use of the available interrupt facilities. These allow for a fast response to an external event, and they give the "impression" of concurrency, often making the need for a real-time kernel obsolete.

In the CoWare model a system is viewed hierarchically and is composed of a number of processes P1, P2 (Fig. 12) connected by point-to-point connection channels 35. Communication between processes takes place through a behavioural interface consisting of ports 29, 27. A port 29, 27 is characterised by a protocol and a data type parameter. For two processes P1 and P2 to be able to communicate their ports 29, 27 must be connected by a channel 35. The process semantics is based on the concept of the Remote procedure Call (RPC). There is one implicit port, the construct port to which an RPC is performed exactly once at start-up. Two types of port exist: master ports 29 and slave ports 27. An RPC is activated through a master port and serviced through a slave port. Master ports 29 are shown as shaded boxes whereas slave ports 27 are represented by unshaded boxes. A process P1, P2 is associated with a specification language and consists of a context 39, 37 and a number of threads 34, 31, 32. The context 39, 37 contains code that is common to all threads within the process, i.e. variable/signals and functions as allowed by the semantics of the specification language. Autonomous threads 34, 32 are not associated with any port and their code is executed, after system initialisation, in an infinite loop. Slave threads 31 are uniquely associated with slave ports 27 and their code is executed when the slave port is activated, i.e. when an RPC is performed to the slave port. There is one special thread, the construct thread which is executed exactly once at start-up.

It is preferred in accordance with this embodiment if interprocess communication is via explicit *send* and *receive* operations on a specific channel 35. These channels 35 are declared as channel objects in the context 39, 37 of the process P1, P2 involved. The sending process must block until the receiving process is ready to receive and vice versa.

To model a thread 31, 32, 34 (process), only the communication behaviour is important, and all data processing within a thread may be ignored, otherwise, by taking into account the internal states of a thread that are often dependent on "wide" data words and complex operations, acceptable processing time limits may be exceeded. This principle is called encapsulation, and it is known to enhance design re-use. This abstraction, however, has the important side-effect of non-determinism. A process can exhibit two types of conditional behaviour. In the first type, the process allows its behaviour to be influenced by its environment. In the second type, the selection is based on some internal data. Because the present invention abstracts from all internal data, this selection is performed without the knowledge or control of the external environment. The first type of choice is denoted as a deterministic choice, and the second type of choice as a non-deterministic choice. With a non-deterministic choice, the environment must be prepared to deal with all possible behaviours that can be selected, if a correct interaction is to be guaranteed. In some cases this situation may lead to "false-negatives", i.e. verification reports a deadlock error where in reality there isn't. However, it may never lead to "false-positives", i.e. where verification reports a flawed design deadlock-free.

The starting point is a set of atomic actions, i.e. indivisible ones The occurrence of an action is called an event and is the result of two concurrent processes - in some cases the environment is implicitly assumed to be the counterpart process - both engaging in the execution of the action under consideration. Clearly, this corresponds to the rendezvous concurrency model. Every event can be regarded as a binary synchronisation, this restriction is due to the point-to-point communication channels of the specification-implementation model. The set of actions of a process that are externally observable is called the alphabet of process *P*, denoted as $\alpha(P)$. The alphabet is a permanent predefined property of a process, and it is logically impossible for a process to engage in a external or visible event. The alphabet is a permanent predefined property of a process and it is impossible for a process to engage in an external or visible event outside its alphabet. Internal synchronisations are represented by a hidden event $\tau$. The environment cannot prevent a process from engaging in a hidden event. Indeed, as $\tau$ represents an internal synchronisation and all synchronisations are binary, it cannot be synchronised upon by any other process. The set of all visible events is denoted as ***Vis***, with $\tau \notin$ ***Vis***. Then, for any process *P*, $\alpha(P) \subseteq$ ***Vis*** applies.

Processes are built from events - that can be seen as the leaf process of the model-and other processes by means of the following operators: sequential composition, deterministic and non-deterministic choice composition, parallel composition, recursion and interrupt composition. One special (leaf) process is *SUCCESS*; it does nothing, i.e. performs no actions, but terminates successfully.

Processes are denoted by process expressions. In the following the notations (process) expression and (process) term will be used synonymously. We also assume a set of process variables denoted by *x*, *y*, etc. The set of all possible process expressions is then defined by the following production system, where $R$ is used as start symbol:

$$R ::= S \mid T$$

$$S ::= x \mid S.R$$

$$T ::= SUCCESS \mid a \mid T.R \mid T+T \mid T^{\circ} \| T^{\circ} \mid T^{\circ} \triangleright T^{\circ} \mid \mu x.T$$

where

$$a \in (Vis \cup \{\tau\})$$

$T^{\circ}$ is $T$ without free occurrences of variables

A sequential composition of two processes $P$ and $Q$, denoted by $P.Q$, is a process that starts the execution of $Q$ after the successful completion of $P$. Successful completion of a process is defined as process reaching a wanted state from which no actions can be performed. Alternatively, we say a process completed successfully when it eventually behaved like *SUCCESS*. In other words, if $P$ has arrived in an unwanted state from which no actions can be performed (i.e. the deadlock state), process $Q$ can never be executed. Mathematically this boils down to $SUCCESS.P = P$ and $P.SUCCESS = P$, for any process $P$ (see Fig. 13(b) for the Petri net mapping).

The deterministic choice of two processes $P$ and $Q$, denoted by $P + Q$, is the process that can do either $P$ or $Q$, where the choice is made by the environment. The non-deterministic choice of two processes $P$ and $Q$, denoted by $P \sqcap Q$, is the process that can either do $P$ or $Q$, where the choice is made by the process itself. In both cases, the decision of which alternative to take, should be made at the beginning of the choice. Notice that the notation $P \sqcap Q$ is a shorthand for the process $(\tau.P) + (\tau.Q)$. Indeed, as $\tau$ denotes a hidden or internal synchronisation event, the outside world cannot interfere at the beginning of the choice; $(\tau.P) + (\tau.Q)$ then degenerates to a non-deterministic choice. Notice that $SUCCESS + P = P + SUCCESS = P$, for any process $P$ (see Fig. 13(b) for the Petri net mapping).

The parallel composition of two processes $P$ and $Q$, denoted by $P \| Q$, executes the processes $P$ and $Q$ simultaneously and independently, except for actions that are common to both processes; if both processes contain an action $a$, this action can only occur if both parties are ready to engage in $a$. Process $P \| Q$ completes successfully, when both $P$ and $Q$ have terminated successfully. In other words, a process $(P \| Q).R$ can only start behaving like $R$, after both $P$ and $Q$ have evolved into *SUCCESS* (see Fig. 13(b) for the Petri net mapping).

The interrupt composition of process $P$ by a process $Q$, denoted by $P \triangleright Q$, is the process that behaves like $P$ but is interrupted on the occurrence of the first event of $Q$. When interrupted, process $P$ arrives in a halt state, and $P \triangleright Q$ behaves like $Q$. After $Q$ has terminated successfully, $P$ leaves its halt state and $P \triangleright Q$ resumes $P$, until possibly being interrupted again. If $P$ terminates unsuccessfully, it is still possible for $P \triangleright Q$ to behave like $Q$. If $P$ terminates successfully, on the other hand, $Q$ cannot start execution any more. In other words, $P \triangleright Q$ terminates successfully, whenever $P$ does. Thus, $\text{SUCCESS} \triangleright P = P$ and $P \triangleright SUCCESS = P$, for any process $P$. Fig. 14 shows the Petri net mapping for such an interrupt in which the slave thread is an IRQ interrupt routine.

Recursion is introduced by considering solutions of equations of the form $x = F(x)$, denoted as $\mu x.F(x)$, with $F(x)$ an expression constructed solely in terms of the sequential composition, choice composition, parallel composition and interrupt composition operators. $F(x)$ contains the process name $x$ and is guarded, i.e. every possible alternative that is offered initially must begin with an event. Process specifications of the form $x = a + x$ are therefore not allowed. As only binary synchronisations are allowed, in a parallel composition an event name $a \neq \tau$ may occur in at most two processes. In other words, in a composition $(a.P) \| (a.Q) \| R$, the event name $a$ may only occur in $P$ and $Q$, but not in $R$. This assumption effectively rules out parallel compositions of processes that are defined recursively as compositions of themselves. A process defined as $P = (a....P) \| (b....Q)$ violates this assumption because each substitution of its definition for its name in the composition creates new "components" in which the same event name occurs. The above process definition defines $P$ to be one process, but of the form $P = (a....a....) \| (b......Q \| (b......Q) \| .......$ The exclusion of this sort of recursive process definitions, has the result that when translating processes to Petri nets, the resulting Petri nets become safe.

Two processes $P$ and $Q$ can be combined into a new process by means of the process calculus described above, i.e. by sequential, choice, parallel, interrupt or recursive compositions as described above. Table 1 lists some of the process expressions derived from Fig. 12. The autonomous thread 34 of process P1 is translated to a process expression T1, the slave thread 31 of process P2 to an expression T2, the autonomous thread 32 of process P2 is translated to an expression T3.

Table 1

| Process Expression | Event |
|---|---|
| $T1 \equiv x = T2.a.x$ | a: data += 2 |
| $T2 \equiv b.c.d.(e+f).g$ | b: p2 = data |
| | c: (x = p2 ) |
| | d: (x > 100) |
| | e: x =10 - x |
| | f: x = 10 + x |
| | g: send (C, x) |
| $T3 \equiv x = g.h.x$ | g: y + receive (C) |
| | h: y++ |
| $P1 \equiv T1$ | |
| $P2 \equiv T3$ | |
| $System \equiv P1 \| P2$ | |

These process expressions are derived by mapping the operations to events and iteratively applying the sequential, choice and recursive composition operators. For *send/receive* operations that access the same channel, the corresponding events are equally named, e.g. *g*. Autonomous threads are converted to recursive process expressions. An RPC to a slave thread is modelled by "in-lining" the callee thread onto the caller thread at the place of the RPC call using the sequential operator. A hierarchical CoWare process is modelled as a parallel composition of its autonomous threads. Each syntactic construct of a process expression is mapped to an equivalent Petri net representation as shown for individual operators in Figs. 13 and 14. Fig. 15 shows the Petri net representation of the process expressions of Table 1. In accordance with the present invention the complete system is finally modelled as a Generalised Petri Net as described above followed by deadlock analysis. This analysis may be carried out on the initial specification or during each or any stage of the implementation process when the "input specification" undergoes a number of transformations, eventually leading to a detailed specification that can be used for manufacturing. A key idea in the present invention is that all intermediate specifications can be captured in the same specification model. Therefore, the statement that a system specification can be modelled by a formal process expression also applies to all intermediate specifications, including the final implementation. During implementation, processes (threads) are refined to a lower level of abstraction, and extra processes are added. Extra processes that require some special attention are the processor cores themselves, as well their corresponding hardware-software interfaces. These hardware-software interfaces make frequent use of the processor's interrupts. Subsequent verification then necessitates the formal modelling of the complete hardware-software interface, including the - interrupts of - processor core, run-time operating system, hardware and software device drivers, etc. The interrupt composition operator then assists as it will allow for an elegant and adequate modelling of a processor's interrupt behaviour.

The present invention has been implemented in a tool, called JULIE, in about 9000 lines of C code. Binary decision diagrams (BDD) were used to represent all transition sets and to perform all set manipulations explicitly but the present invention is not limited thereto. Within the state graph representation, each place has a BDD attribute instead of a conventional "token".

To assess the viability of the present invention, a number of experiments have been carried out whereby each problem to be solved suffers from the state explosion problem. The analysed examples were the non-serialised version of the well-known Dining Philosophers Problem (NSDP), the Asynchronous Arbiter Tree (ASAT), the Overtake Protocol (OVER), and Readers and Writers (RW). To compare with state-of-the-art verification tools, we have chosen the verifier program "SPIN" extended with a Partial-Order Package (SPIN+PO), and the Symbolic Model Verifier (SMV) (Release 2.4.4), as representatives of partial-order methods and symbolic techniques, respectively. We used both packages, as well as the prototype Generalised Partial Order Analysis tool in accordance with the present invention, to test the examples for deadlock situations. Moreover, the results obtained are also valid for safety checks, since the verification of a safety property can always be reduced to a check for deadlock.

Table 2

| Problem(size) | States | SPIN + PO | | SMV | | GPO | |
|---|---|---|---|---|---|---|---|
| | | States | Time (sec) | Peak BDD-size | Time (sec) | States | Time (sec) |
| NSDP(2) | 18 | 12 | 0.08 | 1068 | 0.04 | 3 | 0.01 |
| NSDP(4) | 322 | 110 | 0.13 | 10018 | 0.22 | 3 | 0.03 |
| NSDP(6) | 5778 | 1422 | 1.07 | 52320 | 8.97 | 3 | 0.04 |
| NSDP(8) | 103682 | 19270 | 25.62 | 687263 | 1169.30 | 3 | 0.05 |
| NSDP(10) | $1.86 \times 10^6$ | 239308 | 453.16 | > 24 hours | | 3 | 0.06 |
| ASAT(2) | 88 | 33 | 0.08 | 1587 | 0.05 | 8 | 0.01 |
| ASAT(4) | 7822 | 192 | 0.11 | 117667 | 79.61 | 14 | 0.06 |
| ASAT(8) | $1.58 \times 10^6$ | 3598 | 1.12 | > 24 hours | | 23 | 0.35 |
| OVER(2) | 65 | 28 | 0.09 | 3511 | 0.08 | 6 | 0.01 |
| OVER(3) | 519 | 107 | 0.13 | 10203 | 0.19 | 7 | 0.02 |
| OVER(4) | 4175 | 467 | 0.44 | 11759 | 0.64 | 8 | 0.04 |
| OVER(5) | 33460 | 2059 | 2.05 | 24860 | 3.59 | 9 | 0.06 |
| RW(6) | 72 | 72 | 0.06 | 3689 | 0.09 | 2 | 0.05 |
| RW(9) | 523 | 523 | 1.51 | 9886 | 0.16 | 2 | 0.2 |
| RW(12) | 4110 | 4110 | 16.89 | 10037 | 0.28 | 2 | 0.61 |
| RW(15) | 29642 | 29642 | 194.33 | 10267 | 0.43 | 2 | 1.50 |

In Table 2 the number of states of the complete reachability graph, the number of states of the reachability graphs derived using (generalised) partial-order analysis, as well the peak BDD sizes encountered during symbolic reachability analysis are listed for various instances of the parameterised examples. CPU times, measured on an HP K260 computer manufactured by Hewlet Packard, USA with 896 MB RAM, are also included.

For NSDP, ASAT and OVER, generalised partial-order analysis in accordance with the present invention outperforms both SPIN+PO and SMV. A drastic improvement is observed for NSDP and ASAT. For NSDP, three states are sufficient to detect all deadlock situations, independent of the number of philosophers. As can be observed, CPU times increase linearly with problem size.

For RW, generalised partial-order analysis in accordance with the present invention performs better than SPIN+PO, but slightly worse than SMV. This is because RW exhibits a lot of conditional behaviour where none of the classical partial-order reduction techniques can be applied - this is also visible in the reduced state space which equals the complete state space. For this problem, OBDD's apparently provide an efficient encoding of the state space.

Although the specific embodiments have been described with respect to particular embodiments of the inventions, applications and architectures, modifications and changes of the illustrated embodiments lie within the scope of the invention. No limitations to the scope of the present invention are intended by the illustrated embodiments and/or specific configurations, architectures, etc. described above, and the invention is only to be limited by the scope of the appended claims.

## Claims

1. A method implemented in a computational device of verifying that a system being analysed has a safeness and/or liveness property, comprising the steps of:

   using at least statically available information to substantially reduce the work required to compute a state space describing the system being analysed by computing a reduced state space of the system, the reduced state space still provably permitting verification of the safeness or liveness property; and
   using the reduced state space to verify the safeness and/or liveness property, further comprising the step of:
   including within the definition of each new state of the reduced state space, history information about at least the mutually exclusive transitions enabled in any previous state.

2. A method according to claim 1, further comprising the step of determining statically the presence of a maximal conflicting transition set which is multiple enabled and whose firing will not disable any other maximal conflicting transition set in currently processed state or subsequently nor will disable any other transition which is single enabled either in the currently processed state or subsequently and is not in said maximal conflicting transition set.

3. A method implemented in a computational device of verifying that a system being analysed has a safeness and/or liveness property, comprising the steps of:

   using at least statically available information to substantially reduce the work required to compute a state space describing the system being analysed by computing a reduced state space of the system, the reduced state space still provably permitting verification of the safeness or liveness property; and
   using the reduced state space to verify the safeness and/or liveness property, further comprising a step of determining statically the presence of a maximal conflicting transition set which is multiple enabled and whose firing will not disable any other maximal conflicting transition set either in the currently processed state or subsequently nor will disable any other transition either in the currently processed state or subsequently which is single enabled and is not in said first maximal conflicting transition set.

4. A method according to claim 2 or 3 wherein the transitions of said maximal conflicting transition sets are fired simultaneously to reach a next state.

5. A method according to claim 4 wherein the definition of a next state includes information about transitions of said maximal conflicting transition set fired simultaneously to reach this next state.

6. A method according to any of claims 1 to 5, wherein said history information is used to determine which sets of transitions are valid.

7. A method according to any of the previous claims further including making an implementation of a heterogeneous essentially digital system, comprising the steps of:

   defining a first set of primitive objects representing the specification of the digital system to be analysed for the safeness and/or liveness property, comprising the steps of
   describing the specification of the system in a plurality of processes, each process representing a functional aspect of the system, the processes being primitive objects;
   defining ports and connecting the ports with channels, the ports structuring the communication between the processes, the ports and the channels being primitive objects, one process having one or more ports;
   defining the communication semantics of the ports by a protocol, the protocol being a primitive object; and thereafter
   creating hierarchical objects being refinements of the primitive objects and having more detail, while preserving aspects of the communication semantics; allocating one or more hardware components, the components comprising programmable processors and non-programmable processors; assigning the processes to the hardware components, the processes being assigned to a programmable processor being a software subsystem, the other processes being hardware subsystems; and selecting I/O scenario models for the ports of the software subsystem thereby connecting the ports to the interface of the programmable processor and connecting the interface of the programmable processor to second ports, the second ports representing an essentially identical communication as the ports, and the analysis for the safeness and/or liveness property is carried out on the primitive or the hierarchical objects.

8. A verification tool implemented on a computational device including a memory, the verification tool being of the type wherein the system is modelled as a bounded system of finite state components and verification tool employs a reachability graph in the memory to verify that the system has a given property, comprising:

   a structure within the memory which identifies transitions as members of a maximal conflicting transition set which is multiple enabled and whose firing will not disable any other maximal conflicting transition set in the currently processed state or subsequently nor any other transition which is single enabled in the currently processed state or subsequently and is not in said maximal conflicting set.

9. A simulator of a system implemented on a computational device including a memory, the simulator being of the type wherein the system is modelled as a bounded system of finite state components and the simulation of the operation of the model uses a reachability graph in the memory to measure the system for a given property, comprising: a structure within the memory which records history information about at least the mutually exclusive transitions enabled in any previous state.

10. A verification tool according to claim 8 or a simulator according to claim 9, further comprising:

    a structure within the memory which records history information about at least the mutually exclusive transitions enabled in any previous state.

11. A verification tool implemented on a computational device including a memory, the verification tool being of the type wherein the system is modelled as a bounded system of finite state components and verification tool employs a reachability graph in the memory to verify that the system has a given property, comprising: a structure within the memory which records history information about at least the mutually exclusive transitions enabled in any previous state.

12. A simulator of a system implemented on a computational device including a memory, the simulator being of the type wherein the system is modelled as a bounded system of finite state components and the simulation of the operation of the model uses a reachability graph in the memory to measure the system for a given property, comprising: a structure within the memory which records history information about at least the mutually exclusive transitions enabled in any previous state.

13. A verification tool according to claim 10 or 11 or a simulator according to claim 10 or 12, further comprising: a structure in said memory defining the new state and said new state only including valid transition sets as determined by the history information.

14. A verification tool according to any of claims 8, 10, 11 or 13 or a simulator according to any of claims 9, 10, 12 or 13, wherein the system model comprises a database compiled on a memory structure adapted for access by executable programs on a computer for generating the implementation of the heterogeneous essentially digital system, comprising a plurality of objects representing aspects of the digital system wherein the objects comprise primitive objects representing the specification of the digital system and hierarchical objects being created by the executable programs while generating the implementation of the digital system, the hierarchical objects being refinements of the primitive objects and having more detail and preserving any one of all of the aspects to thereby generate the implementation of the digital system; and further comprising relations in between the primitive objects and in between the hierarchical objects and between the primitive objects and the hierarchical objects; and further comprising functions for manipulating the objects and the relations.

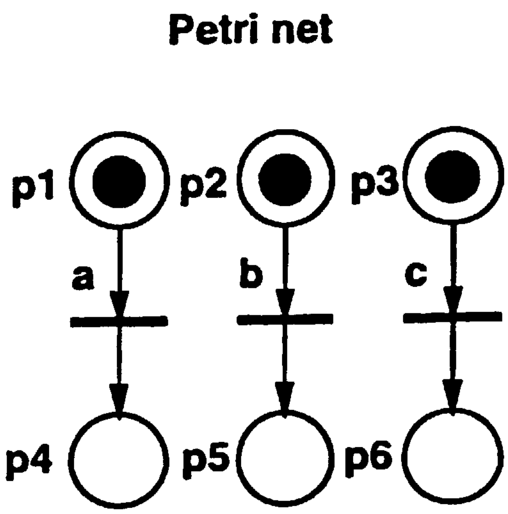


Fig. 1a

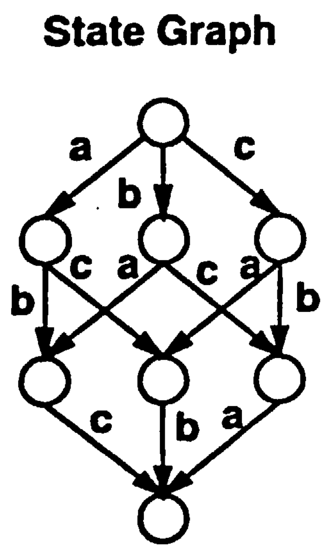


Fig. 1b

Fig. 1

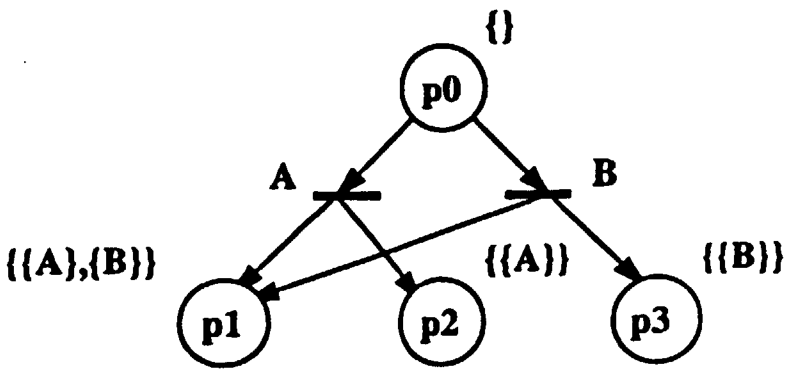


Fig. 4

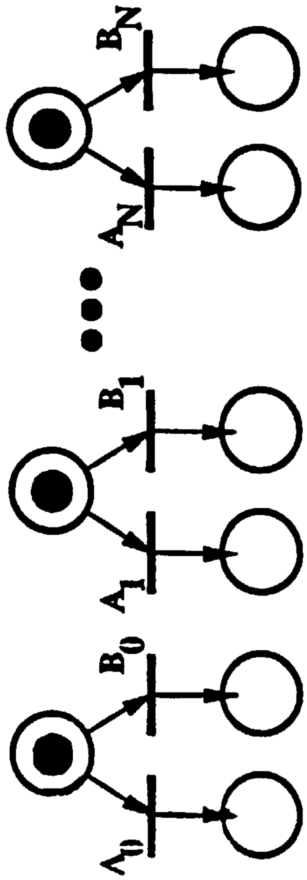


Fig. 2a

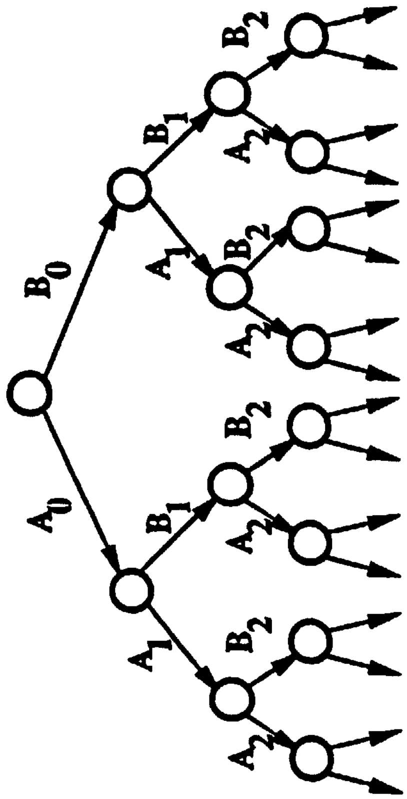


Fig. 2b

Fig. 2

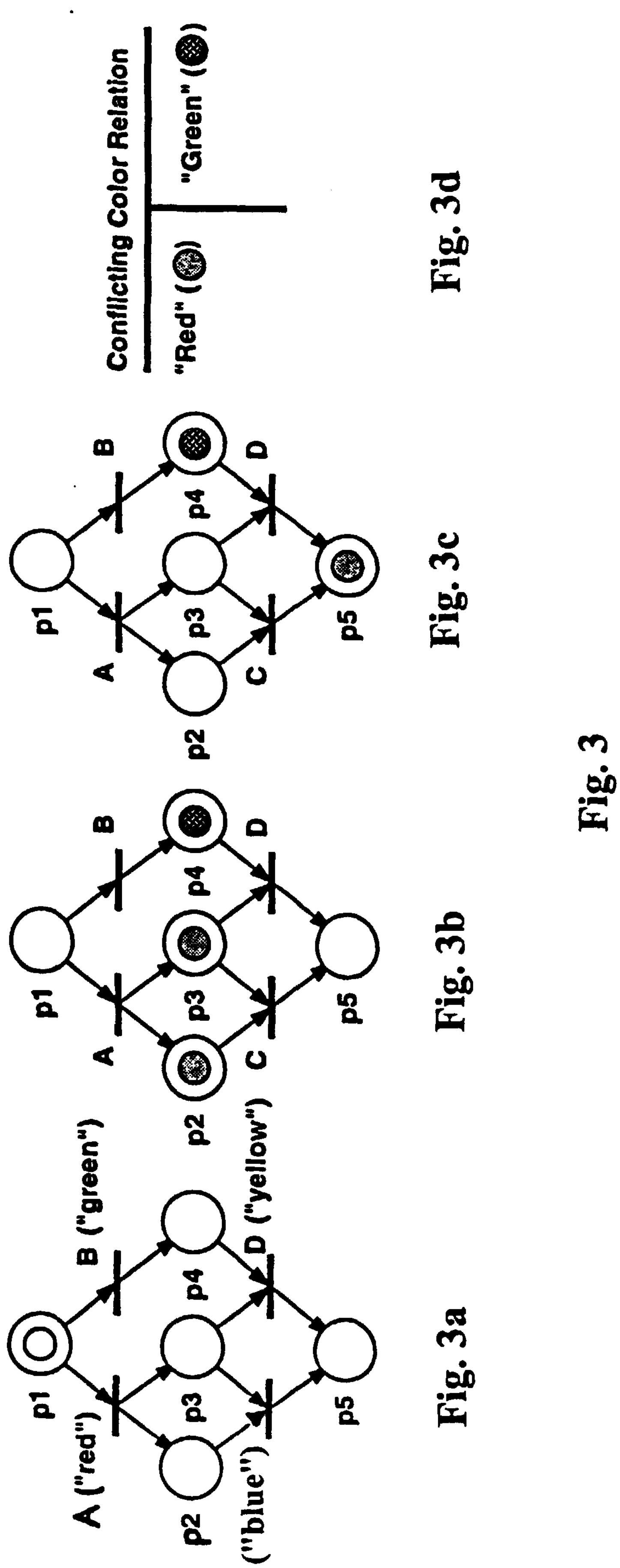


Fig. 3a

Fig. 3b

Fig. 3c

Fig. 3d

Fig. 3

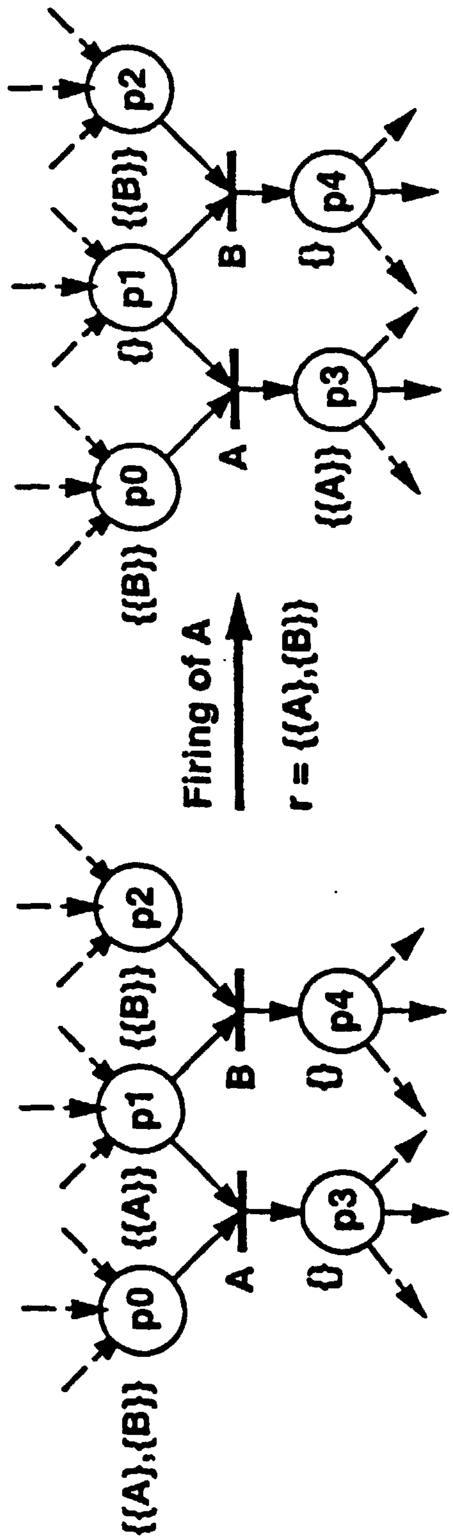


Fig. 5a

Fig. 5b

Fig. 5

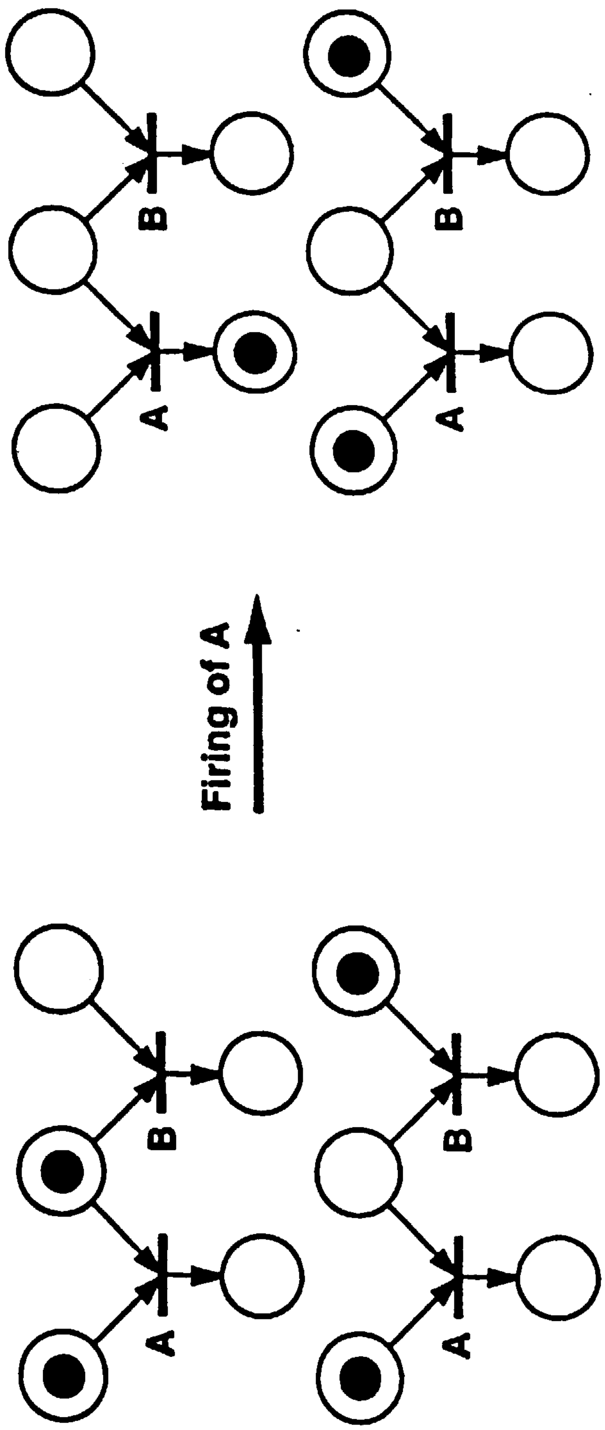


Fig. 6a

Fig. 6b

Fig. 6

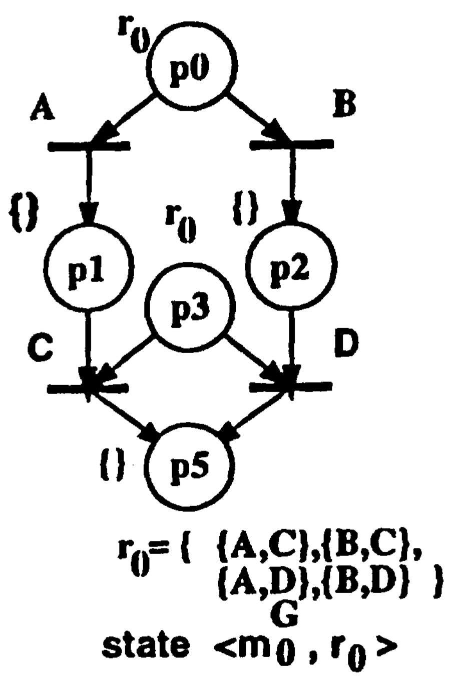


Fig. 7a

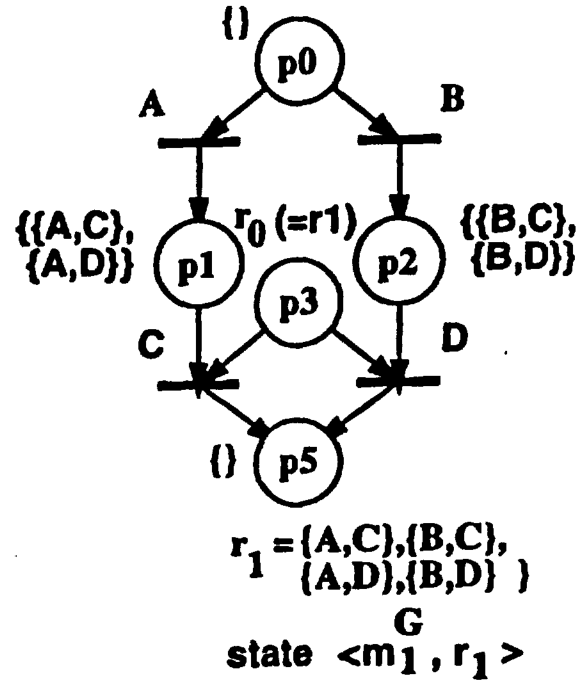


Fig. 7b

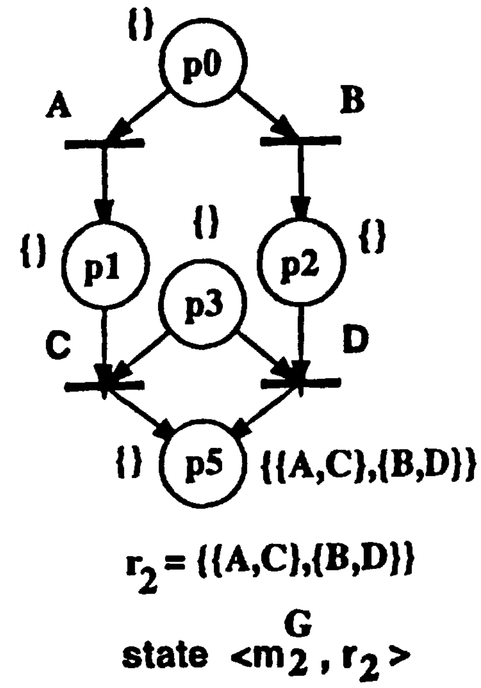


Fig. 7c

Fig. 7

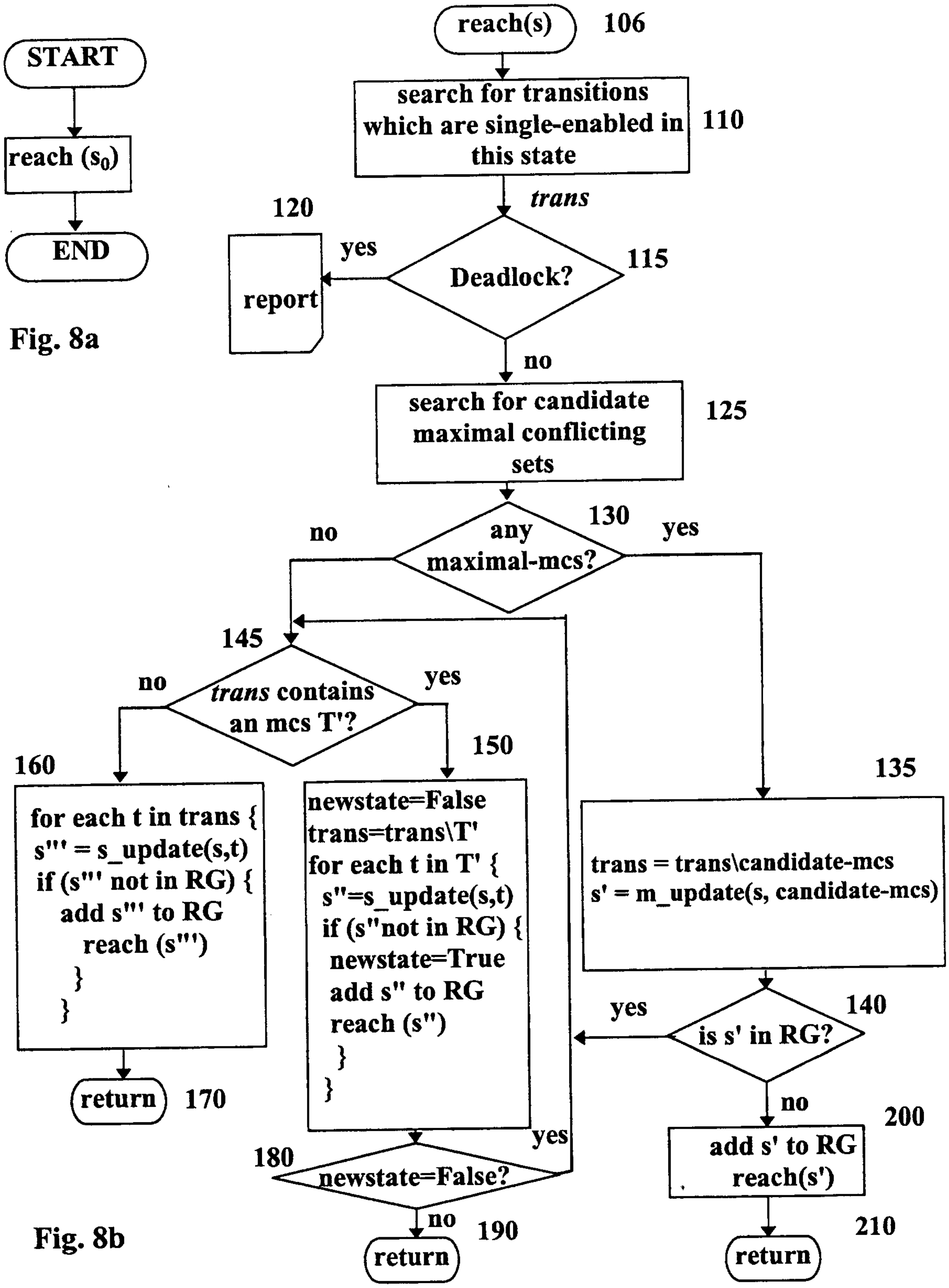
START
reach ($s_0$)
END

Fig. 8a

reach(s)
106
search for transitions which are single-enabled in this state
110
trans
Deadlock?
115
yes
120
report
no
search for candidate maximal conflicting sets
125
any maximal-mcs?
130
no
yes
145
trans contains an mcs T'?
no
yes
150
160
for each t in trans {
s''' = s_update(s,t)
if (s''' not in RG) {
add s''' to RG
reach (s''')
}
}
return
170
newstate=False
trans=trans\T'
for each t in T' {
s"=s_update(s,t)
if (s"not in RG) {
newstate=True
add s" to RG
reach (s")
}
}
180
newstate=False?
yes
no
return
190
135
trans = trans\candidate-mcs
s' = m_update(s, candidate-mcs)
is s' in RG?
140
yes
no
add s' to RG
reach(s')
200
return
210

Fig. 8b

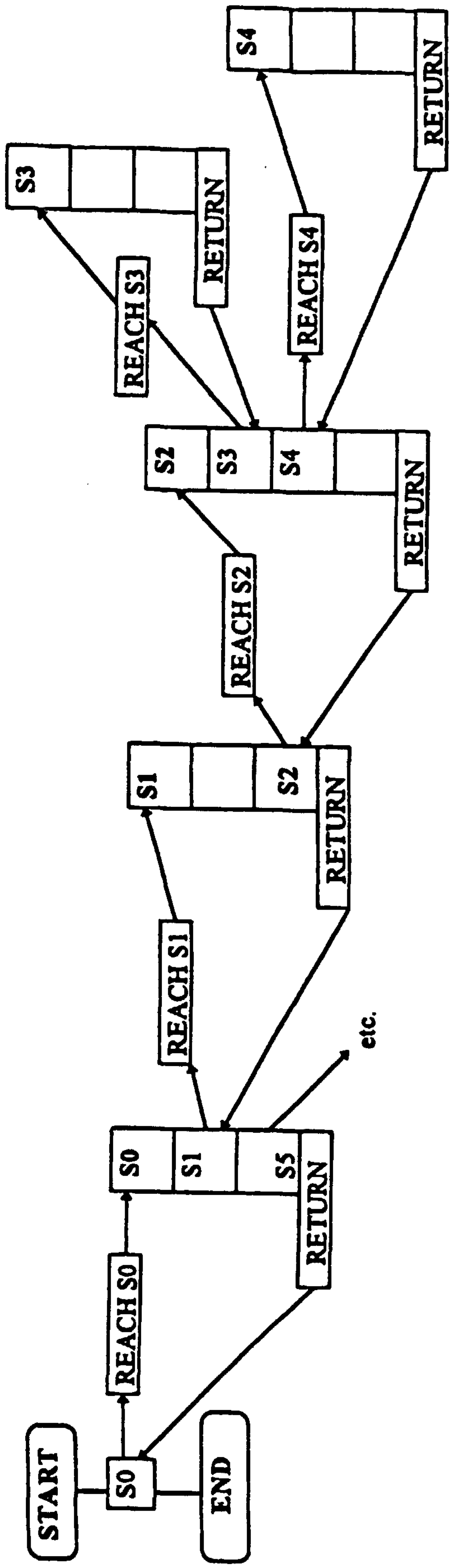
START
S0
END
REACH S0
S0
S1
S5
RETURN
etc.
REACH S1
S1
S2
RETURN
REACH S2
S2
S3
S4
RETURN
REACH S3
S3
RETURN
REACH S4
S4
RETURN

Fig. 8c

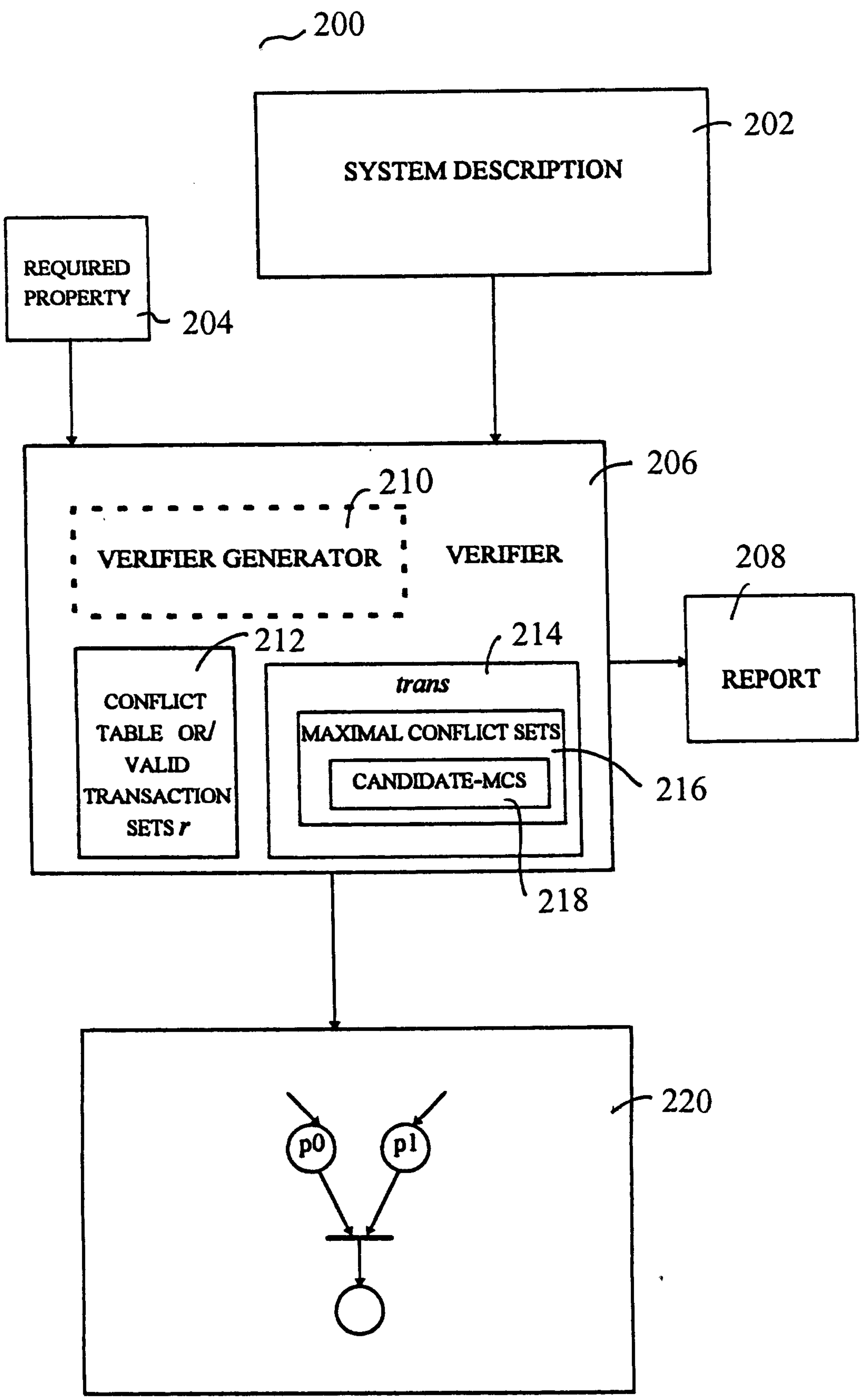
200
SYSTEM DESCRIPTION
202
REQUIRED PROPERTY
204
206
210
VERIFIER GENERATOR
VERIFIER
208
212
214
trans
CONFLICT TABLE OR/ VALID TRANSACTION SETS r
MAXIMAL CONFLICT SETS
CANDIDATE-MCS
REPORT
216
218
220
p0
p1

Fig. 9

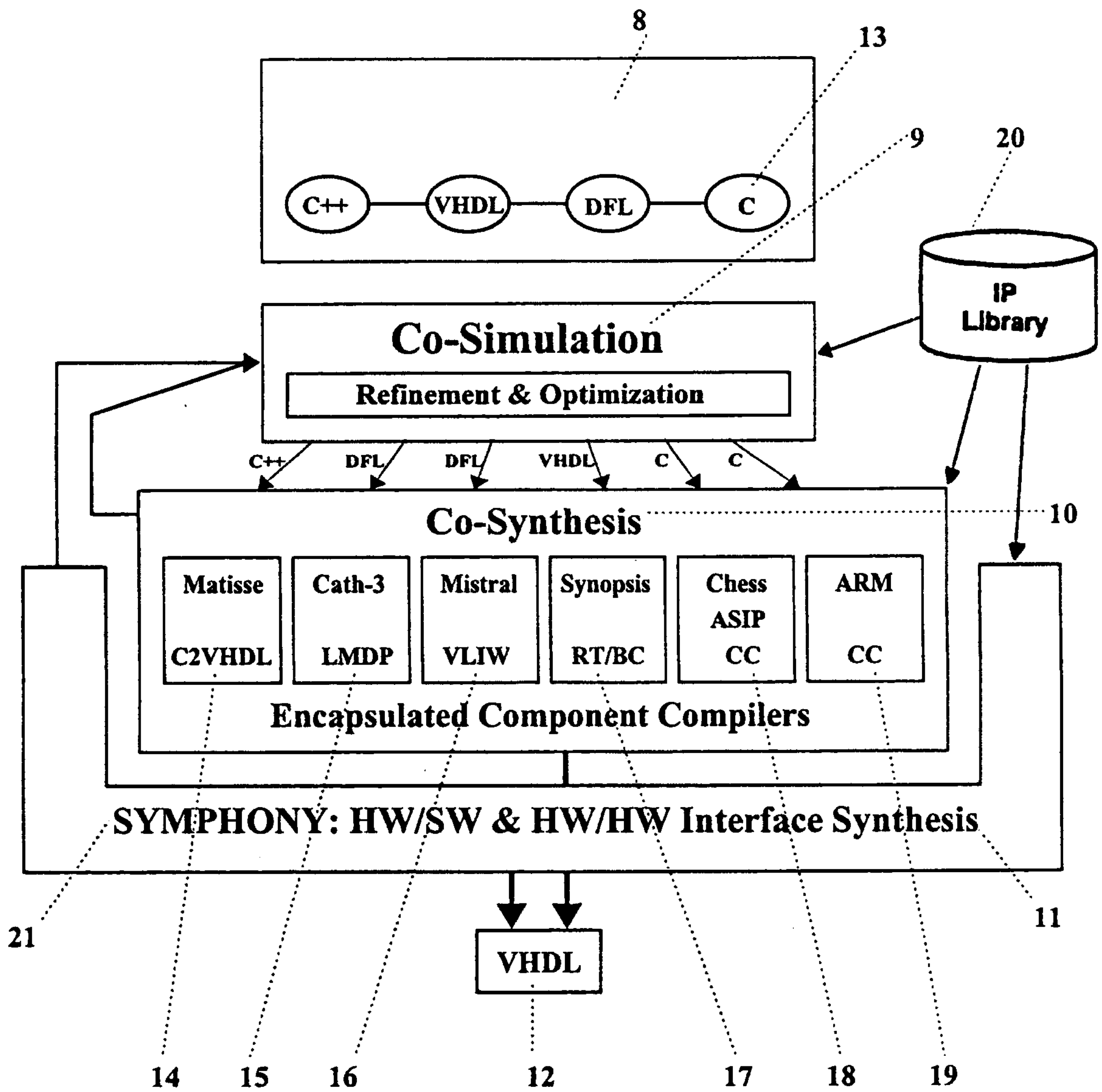
8
13
9
20
C++
VHDL
DFL
C
IP Library
Co-Simulation
Refinement & Optimization
C++
DFL
DFL
VHDL
C
C
Co-Synthesis
10
Matisse
C2VHDL
Cath-3
LMDP
Mistral
VLIW
Synopsis
RT/BC
Chess
ASIP
CC
ARM
CC
Encapsulated Component Compilers
SYMPHONY: HW/SW & HW/HW Interface Synthesis
21
11
VHDL
14
15
16
12
17
18
19

Fig. 10

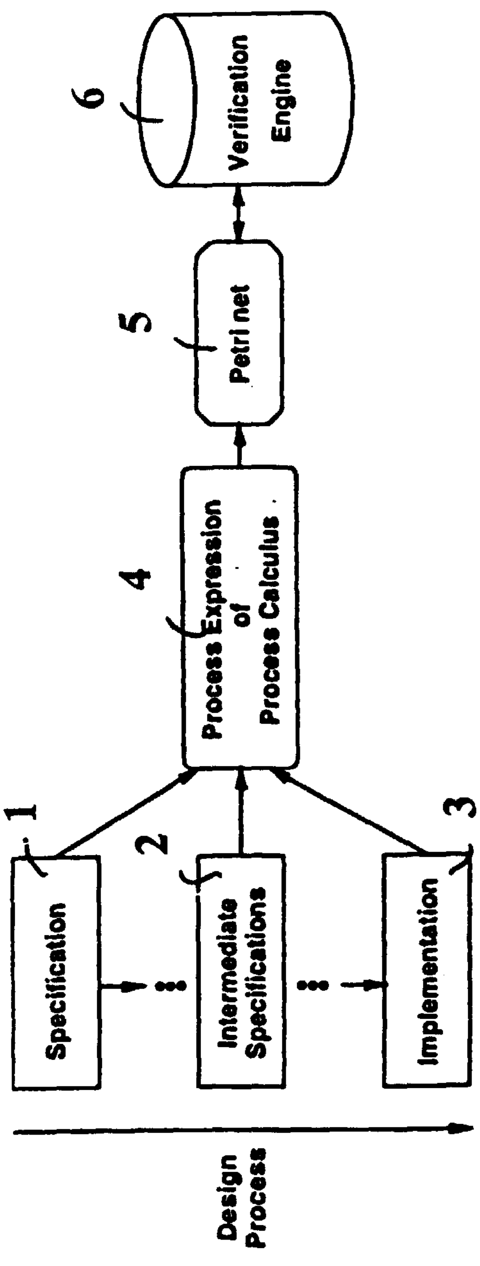
Design Process
Specification
Intermediate Specifications
Implementation
1
2
3
Process Expression of Process Calculus
4
Petri net
5
Verification Engine
6

Fig. 11

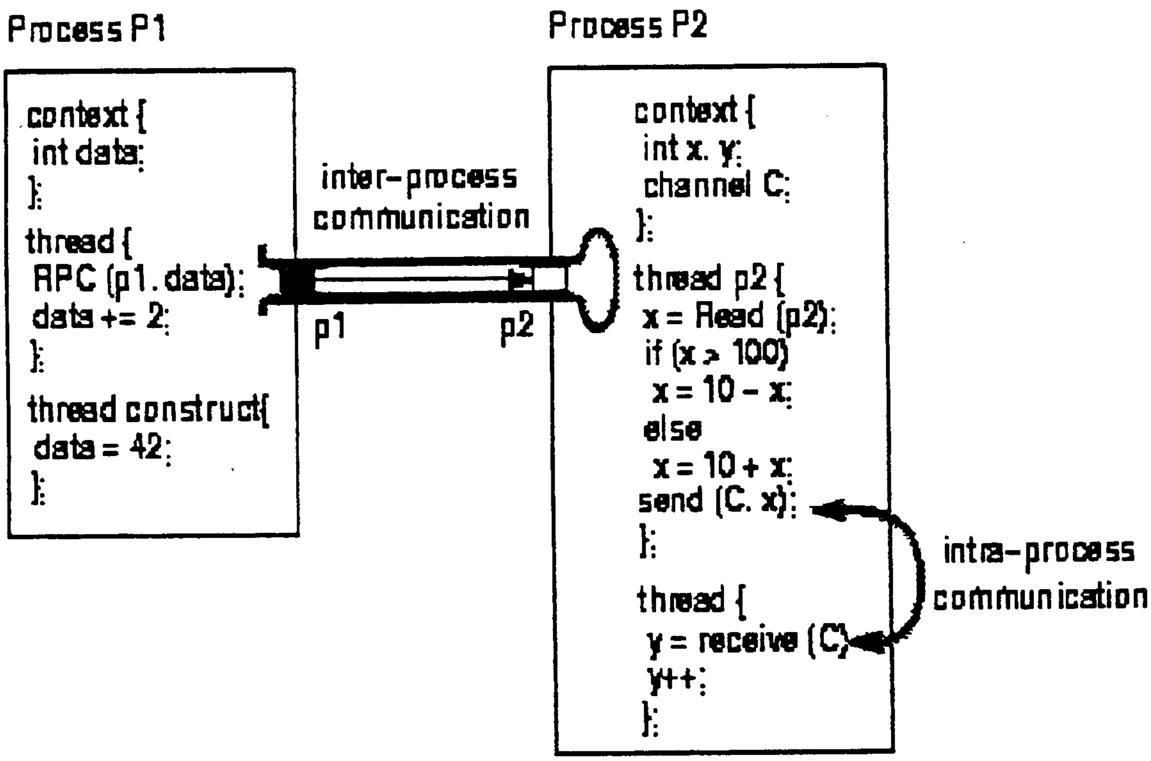
Process P1
context {
int data;
};
thread {
RPC (p1.data);
data += 2;
};
thread construct{
data = 42;
};
inter-process
communication
p1
p2
Process P2
context {
int x. y;
channel C;
};
thread p2 {
x = Read (p2);
if (x > 100)
x = 10 - x;
else
x = 10 + x;
send (C. x);
};
thread {
y = receive (C);
y++;
};
intra-process
communication

Fig. 12

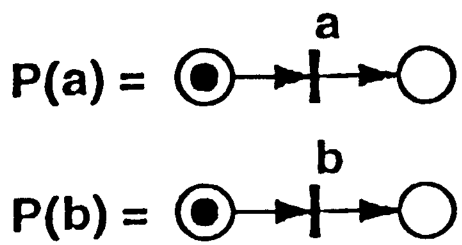


Fig. 13a

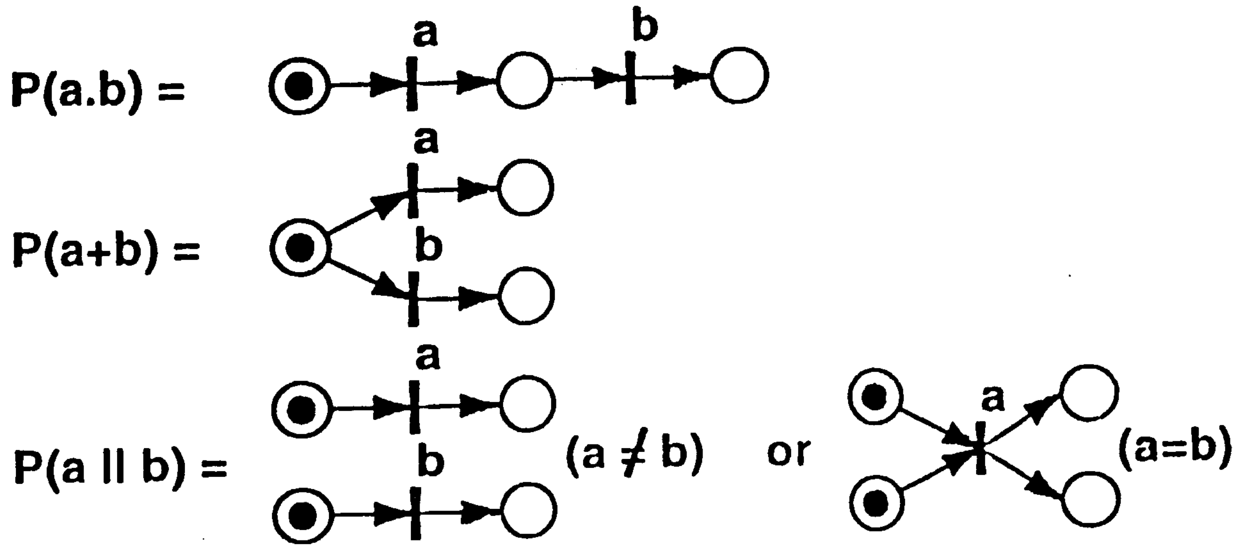


Fig. 13b

Fig. 13

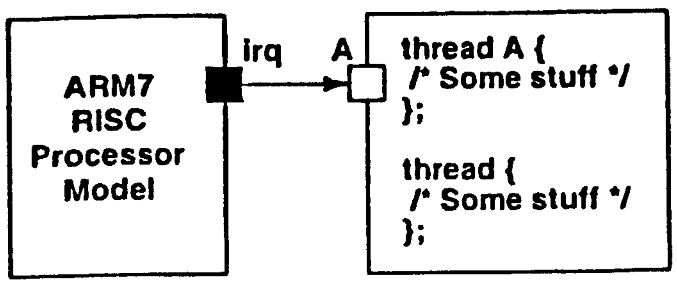


Fig. 14a

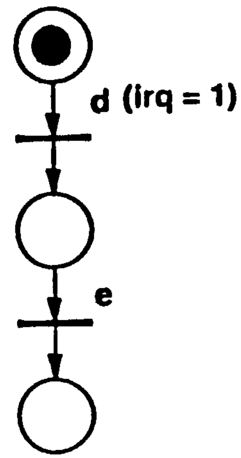


Fig. 14b

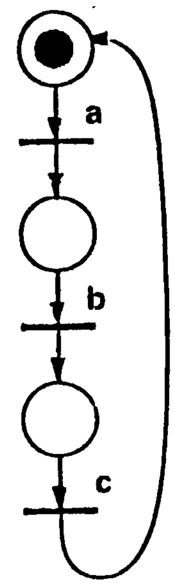


Fig. 14c

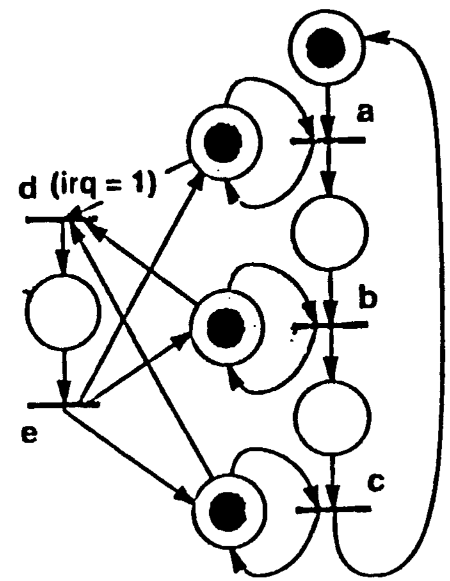


Fig. 14d

Fig. 14

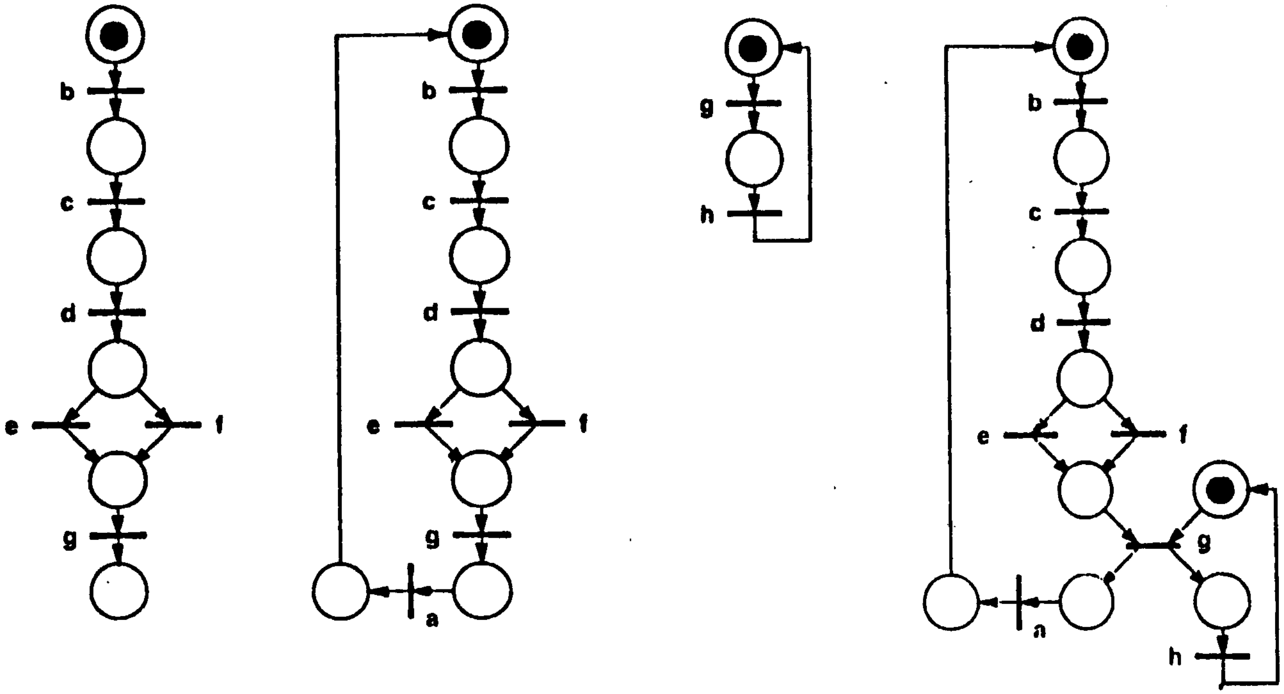


| (a) | | (b) | | (c) | | (d) | |
|---|---|---|---|---|---|---|---|
| b: | p2 = data | b: | p2 = data | g: | y = receive (C) | b: | p2 = data |
| c: | x = p2 | c: | x = p2 | h: | y++ | c: | x = p2 |
| d: | (x > 100) | d: | (x > 100) | | | d: | (x > 100) |
| e: | x = 10 - x | e: | x = 10 - x | | | e: | x = 10 - x |
| f: | x = 10 + x | f: | x = 10 + x | | | f: | x = 10 + x |
| g: | send (C, x) | g: | send (C, x) | | | g: | send (C, x) |
| | | a: | data += 2 | | | a: | data += 2 |
| | | | | | | g: | y = x |
| | | | | | | h: | y++ |

Fig. 15

European Patent Office

# EUROPEAN SEARCH REPORT

Application Number
EP 98 20 2475

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US 5 161 211 A (TAGUCHI KOUICHI ET AL) 3 November 1992<br>* column 1, line 1 - column 2, line 63 *<br>--- | 1-14 | G06F9/44 |
| A | WO 92 15937 A (DIGITAL EQUIPMENT CORP) 17 September 1992<br>* page 8, line 1 - page 9, line 14 *<br>--- | 1-14 | |
| A | "SYMBOL TABLE-BASED PROGRAM EDITOR" IBM TECHNICAL DISCLOSURE BULLETIN, vol. 34, no. 5, 1 October 1991, pages 332-337, XP000189790<br>* the whole document *<br>--- | 1-14 | |
| A | "MINIMAL LENGTH TEST SEQUENCES FOR PROTOCOL CONFORMANCE" IBM TECHNICAL DISCLOSURE BULLETIN, vol. 32, no. 6B, 1 November 1989, pages 206-209, XP000073800<br>* the whole document *<br>----- | 1-14 | |

TECHNICAL FIELDS SEARCHED (Int.Cl.6)
G06F

The present search report has been drawn up for all claims

| Place of search | Date of completion of the search | Examiner |
|---|---|---|
| THE HAGUE | 8 December 1998 | Brandt, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)